# EUROPEAN PATENT APPLICATION

(11) **EP 4 525 495 A1**
(43) Date of publication of application: **19.03.2025**
(21) Application number: 22941051.9
(22) Date of filing: 09.05.2022
(51) Int. Cl.: H04W 12/00

(54) **AUTHENTICATION METHOD AND DEVICE, MEDIUM AND CHIP**

(71) Applicant: Beijing Xiaomi Mobile Software Co., Ltd., Beijing 100085 (CN)
(72) Inventor: LIANG, Haoran, Beijing 100085 (CN); LU, Wei, Beijing 100085 (CN)
(74) Representative: Stöckeler, Ferdinand
(86) International application number: PCT/CN2022/091816
(87) International publication number: WO 2023/216084

(57) **Abstract**

The present disclosure relates to an authentication method and device, a medium and a chip. The method comprises: determining, from one or more first entities, a target entity requesting communication; determining a first permission request parameter according to the target entity; sending an application session establishment request message to a first proxy entity according to the first permission request parameter; in response to receiving an application session establishment response message sent by the first proxy entity, determining whether the user equipment and the target entity have a first communication permission; and when the user equipment and the target entity have the first communication permission, performing identity authentication by means of the first proxy entity. The application session establishment request message is used for instructing the first proxy entity to determine, according to the first permission request parameter, whether the user equipment and the target entity have the first communication permission. The first entity comprises an entity which provides an application function. The first proxy entity comprises an entity which provides an authentication function, and the first proxy entity provides an authentication proxy function for the first entity.

## Description

### FIELD

The present invention relates to the field of communication, and more particularly to an authentication method, an authentication apparatus, a medium and a chip.

### BACKGROUND

In the wireless communication system, 3GPP (3rd Generation Partnership Project) defines the session security protection function between the User Equipment (UE) and the application function, and proposes an application-based key management method, i.e., authentication and key management for applications based on 3GPP credentials (AKMA).

In the related art, the user equipment can exchange messages with an application function (AF) entity based on AKMA, and determine the access authority of the user equipment to the application function AF entity, so as to establish a secure session with the application function AF entity, which will increase the load of the application function AF entity and reduce the efficiency of the AF entity.

### SUMMARY

In order to overcome the above problems in the related art, the present invention provides an authentication method, an authentication apparatus, a medium and a chip.

According to a first aspect of embodiments of the present invention, an authentication method is provided, which is applied to a user equipment, and includes:
determining, from one or more first entities, a target entity with which communication is requested;
determining a first authority request parameter according to the target entity;
sending an application session establishment request message to a first proxy entity according to the first authority request parameter; where the application session establishment request message is configured to instruct the first proxy entity to determine whether the user equipment has a first communication authority with the target entity according to the first authority request parameter; the first entity includes an entity providing an application function, the first proxy entity includes a trusted entity providing an authentication function inside a 3GPP operator domain, and the first proxy entity provides an authentication proxy function for the first entity;
determining whether the user equipment has the first communication authority with the target entity in response to receiving an application session establishment response message sent by the first proxy entity; and
in a case that the user equipment has the first communication authority with the target entity, performing authentication through the first proxy entity.

According to a second aspect of embodiments of the present invention, an authentication method is provided, which is applied to a first proxy entity, and includes:
receiving an application session establishment request message sent by a user equipment; where the application session establishment request message includes a first authority request parameter, the application session establishment request message is configured to instruct the first proxy entity to determine whether the user equipment has a first communication authority with a target entity according to the first authority request parameter, the target entity is an entity which is determined by the user equipment from one or more first entities and with which communication is requested, the first entity includes an entity providing an application function, the first proxy entity includes a trusted entity providing an authentication function inside a 3GPP operator domain, and the first proxy entity provides an authentication proxy function for the first entity;
determining whether the user equipment has the first communication authority with the target entity according to the first authority request parameter; and
in a case that the user equipment has the first communication authority with the target entity, sending an application session establishment response message to the user equipment, and performing UE authentication.

According to a third aspect of embodiments of the present invention, an authentication method is provided, which is applied to a third entity, and includes:
receiving a second authority request parameter sent by a first proxy entity; where the second authority request parameter is configured to instruct the third entity to determine whether a user equipment has a first communication authority with a target entity, the target entity is an entity which is determined by the user equipment from one or more first entities and with which communication is requested, the first entity includes an entity providing an application function, the first proxy entity includes a trusted entity providing an authentication function inside a 3GPP operator domain, the first proxy entity provides an authentication proxy function for the first entity, and the third entity includes an entity that provides AKMA authorization and application key derivation functions;
determining whether the user equipment has the first communication authority with the target entity according to the second authority request parameter;
acquiring first pending key information in a case that the user equipment has the first communication authority with the target entity; and
sending the first pending key information to the first proxy entity.

According to a fourth aspect of embodiments of the present invention, an authentication method is provided, which is applied to a target entity in one or more first entities, and includes:
acquiring an authentication result of a first proxy entity to a user equipment, where the authentication result includes a first authentication result or a second authentication result, the first authentication result is configured to indicate that the user equipment has a first communication authority with the target entity; the second authentication result is configured to indicate that the user equipment has a second communication authority with the target entity; the first entity includes an entity providing an application function, the target entity is an entity which is determined by the user equipment from one or more first entities and with which communication is requested, the first proxy entity includes a trusted entity providing an authentication function inside a 3GPP operator domain, and the first proxy entity provides an authentication proxy function for the first entity; and
communicating with the user equipment according to the authentication result.

According to a fifth aspect of embodiments of the present invention, an authentication method is provided, which is applied to a second entity, and includes:
acquiring an authentication result of a first proxy entity to a user equipment; where the authentication result includes a first authentication result or a second authentication result, the first authentication result is configured to indicate that the user equipment has a first communication authority with a target entity; the second authentication result is configured to indicate that the user equipment has a second communication authority with the target entity; the target entity is an entity which is determined by the user equipment from one or more first entities and with which communication is requested, the first entity includes an untrusted entity providing an application function outside a 3GPP operator domain, the first proxy entity includes a trusted entity providing an authentication function inside the 3GPP operator domain, and the first proxy entity provides an authentication proxy function for the first entity; and
sending the authentication result to the target entity to make the target entity communicate with the user equipment according to the authentication result.

According to a sixth aspect of embodiments of the present invention, an authentication apparatus is provided, which is applied to a user equipment, and includes:
a target entity determining module configured to determine, from one or more first entities, a target entity with which communication is requested;
a parameter determining module configured to determine a first authority request parameter according to the target entity;
a first message sending module configured to send an application session establishment request message to a first proxy entity according to the first authority request parameter; where the application session establishment request message is configured to instruct the first proxy entity to determine whether the user equipment has a first communication authority with the target entity according to the first authority request parameter; the first entity includes an entity providing an application function, the first proxy entity includes a trusted entity providing an authentication function inside a 3GPP operator domain, and the first proxy entity provides an authentication proxy function for the first entity;
a first message receiving module configured to determine whether the user equipment has the first communication authority with the target entity in response to receiving an application session establishment response message sent by the first proxy entity; and
an authentication module configured to perform authentication through the first proxy entity in a case that the user equipment has the first communication authority with the target entity.

According to a seventh aspect of embodiments of the present invention, an authentication apparatus is provided, which is applied to a first proxy entity, includes:
a first proxy receiving module configured to receive an application session establishment request message sent by a user equipment; where the application session establishment request message includes a first authority request parameter, the application session establishment request message is configured to instruct the first proxy entity to determine whether the user equipment has a first communication authority with a target entity according to the first authority request parameter, the target entity is an entity which is determined by the user equipment from one or more first entities and with which communication is requested, the first entity includes an entity providing an application function, the first proxy entity includes a trusted entity providing an authentication function inside a 3GPP operator domain, and the first proxy entity provides an authentication proxy function for the first entity;
a first proxy determining module configured to determine whether the user equipment has the first communication authority with the target entity according to the first authority request parameter; and
a first proxy sending module configured to send an application session establishment response message to the user equipment, and perform UE authentication in a case that the user equipment has the first communication authority with the target entity.

According to an eighth aspect of embodiments of the present invention, an authentication apparatus is provided, which is applied to a third entity, and includes:
a third receiving module configured to receive a second authority request parameter sent by a first proxy entity; where the second authority request parameter is configured to instruct the third entity to determine whether a user equipment has a first communication authority with a target entity, the target entity is an entity which is determined by the user equipment from one or more first entities and with which communication is requested, the first entity includes an entity providing an application function, the first proxy entity includes a trusted entity providing an authentication function inside a 3GPP operator domain, the first proxy entity provides an authentication proxy function for the first entity, and the third entity includes an entity that provides AKMA authorization and application key derivation functions;
a third determining module configured to determine whether the user equipment has the first communication authority with the target entity according to the second authority request parameter;
a third key module configured to acquire first pending key information in a case that the user equipment has the first communication authority with the target entity; and
a third sending module configured to send the first pending key information to the first proxy entity.

According to a ninth aspect of embodiments of the present invention, an authentication apparatus is provided, which is applied to a target entity in one or more first entities, and includes: a first communication module configured to:
acquire an authentication result of a first proxy entity to a user equipment, where the authentication result includes a first authentication result or a second authentication result, the first authentication result is configured to indicate that the user equipment has a first communication authority with the target entity; the second authentication result is configured to indicate that the user equipment has a second communication authority with the target entity; the first entity includes an entity providing an application function, the target entity is an entity which is determined by the user equipment from one or more first entities and with which communication is requested, the first proxy entity includes a trusted entity providing an authentication function inside a 3GPP operator domain, and the first proxy entity provides an authentication proxy function for the first entity; and
communicate with the user equipment according to the authentication result.

According to a tenth aspect of embodiments of the present invention, an authentication apparatus is provided, which is applied to a second entity, and includes:
a second receiving module configured to acquire an authentication result of a first proxy entity to a user equipment; where the authentication result includes a first authentication result or a second authentication result, the first authentication result is configured to indicate that the user equipment has a first communication authority with a target entity; the second authentication result is configured to indicate that the user equipment has a second communication authority with the target entity; the target entity is an entity which is determined by the user equipment from one or more first entities and with which communication is requested, the first entity includes an untrusted entity providing an application function outside a 3GPP operator domain, the first proxy entity includes a trusted entity providing an authentication function inside the 3GPP operator domain, and the first proxy entity provides an authentication proxy function for the first entity; and
a second sending module configured to send the authentication result to the target entity to make the target entity communicate with the user equipment according to the authentication result.

According to an eleventh aspect of embodiments of the present invention, an authentication apparatus is provided, which includes: a processor; and a memory for storing instructions executable by the processor. The processor is configured to perform the steps of the authentication method according to the first aspect of the present invention.

According to a twelfth aspect of embodiments of the present invention, an authentication apparatus is provided, which includes: a processor; and a memory for storing instructions executable by the processor. The processor is configured to perform the steps of the authentication method according to the second aspect of the present invention.

According to a thirteenth aspect of embodiments of the present invention, an authentication apparatus is provided, which includes: a processor; and a memory for storing instructions executable by the processor. The processor is configured to perform the steps of the authentication method according to the third aspect of the present invention.

According to a fourteenth aspect of embodiments of the present invention, an authentication apparatus is provided, which includes: a processor; and a memory for storing instructions executable by the processor. The processor is configured to perform the steps of the authentication method according to the fourth aspect of the present invention.

According to a fifteenth aspect of embodiments of the present invention, an authentication apparatus is provided, which includes: a processor; and a memory for storing instructions executable by the processor. The processor is configured to perform the steps of the authentication method according to the fifth aspect of the present invention.

According to a sixteenth aspect of embodiments of the present invention, a computer-readable storage medium is provided, which has stored therein computer program instructions that, when executed by a processor, cause the steps of the authentication method according to the first aspect of the present invention to be implemented.

According to a seventeenth aspect of embodiments of the present invention, a computer-readable storage medium is provided, which has stored therein computer program instructions that, when executed by a processor, cause the steps of the authentication method according to the second aspect of the present invention to be implemented.

According to an eighteenth aspect of embodiments of the present invention, a computer-readable storage medium is provided, which has stored therein computer program instructions that, when executed by a processor, cause the steps of the authentication method according to the third aspect of the present invention to be implemented.

According to a nineteenth aspect of embodiments of the present invention, a computer-readable storage medium is provided, which has stored therein computer program instructions that, when executed by a processor, cause the steps of the authentication method according to the fourth aspect of the present invention to be implemented.

According to a twentieth aspect of embodiments of the present invention, a computer-readable storage medium is provided, which has stored therein computer program instructions that, when executed by a processor, cause the steps of the authentication method according to the fifth aspect of the present invention to be implemented.

According to a twenty-first aspect of embodiments of the present invention, a chip is provided, which includes a processor and an interface. The processor is configured to read instructions to perform the steps of the authentication method according to the first aspect of the present invention.

According to a twenty-second aspect of embodiments of the present invention, a chip is provided, which includes a processor and an interface. The processor is configured to read instructions to perform the steps of the authentication method according to the second aspect of the present invention.

According to a twenty-third aspect of embodiments of the present invention, a chip is provided, which includes a processor and an interface. The processor is configured to read instructions to perform the steps of the authentication method according to the third aspect of the present invention.

According to a twenty-fourth aspect of embodiments of the present invention, a chip is provided, which includes a processor and an interface. The processor is configured to read instructions to perform the steps of the authentication method according to the fourth aspect of the present invention.

According to a twenty-fifth aspect of embodiments of the present invention, a chip is provided, which includes a processor and an interface. The processor is configured to read instructions to perform the steps of the authentication method according to the fifth aspect of the present invention.

The technical solutions provided by embodiments of the present invention may include the following beneficial effects. the target entity with which communication is requested is determined from one or more first entities; the first authority request parameter is determined according to the target entity; the application session establishment request message is sent to the first proxy entity according to the first authority request parameter; it is determined whether the user equipment has the first communication authority with the target entity in response to receiving the application session establishment response message sent by the first proxy entity; and in a case that the user equipment has the first communication authority with the target entity, the authentication is performed through the first proxy entity. The application session establishment request message is configured to instruct the first proxy entity to determine whether the user equipment has the first communication authority with the target entity according to the first authority request parameter; the first entity may include the entity providing the application function, the first proxy entity may include the trusted entity providing the authentication function inside the 3GPP operator domain, and the first proxy entity provides the authentication proxy function for the first entity. In this way, the trusted first proxy entity inside the 3GPP operator domain may determine whether the user equipment has the first communication authority with the first entity, and perform the UE authentication in a case that the user equipment has the first communication authority, so that part of functions of the first entity can be realized through the first proxy entity, thereby reducing the load of the first entity and improving the efficiency of the first entity. Moreover, the user equipment realizes the authorization and authentication with one or more first entities through the unified first proxy entity, which also reduces the complexity of UE authentication and improves the efficiency of the user equipment.

It is to be understood that both the foregoing general description and the following detailed description are illustrative and explanatory only, and are not restrictive of the present invention.

### BRIEF DESCRIPTION OF THE DRAWINGS

The accompanying drawings, which are incorporated in and constitute a part of this specification, illustrate embodiments consistent with the present invention and together with the description, serve to explain the principles of the present invention.
Fig. 1 is a schematic diagram of a communication system to which embodiments of the present invention are applicable according to an illustrative embodiment.
Fig. 2 is a schematic diagram of another communication system to which embodiments of the present invention are applicable according to an illustrative embodiment.
Fig. 3 is a flowchart of an authentication method according to an illustrative embodiment.
Fig. 4 is a flowchart of an authentication method according to an illustrative embodiment.
Fig. 5 is a flowchart of an authentication method according to an illustrative embodiment.
Fig. 6 is a flowchart of an authentication method according to an illustrative embodiment.
Fig. 7 is a flowchart of an authentication method according to an illustrative embodiment.
Fig. 8 is a flowchart of an authentication method according to an illustrative embodiment.
Fig. 9 is a flowchart of an authentication method according to an illustrative embodiment.
Fig. 10 is a flowchart of an authentication method according to an illustrative embodiment.
Fig. 11 is a flowchart of an authentication method according to an illustrative embodiment.
Fig. 12 is a flowchart of an authentication method according to an illustrative embodiment.
Fig. 13 is a block diagram of an authentication apparatus according to an illustrative embodiment.
Fig. 14 is a block diagram of an authentication apparatus according to an illustrative embodiment.
Fig. 15 is a block diagram of an authentication apparatus according to an illustrative embodiment.
Fig. 16 is a block diagram of an authentication apparatus according to an illustrative embodiment.
Fig. 17 is a block diagram of an authentication apparatus according to an illustrative embodiment.
Fig. 18 is a block diagram of an authentication apparatus according to an illustrative embodiment.
Fig. 19 is a block diagram of an authentication apparatus according to an illustrative embodiment.
Fig. 20 is a block diagram of an authentication apparatus according to an illustrative embodiment.

### DETAILED DESCRIPTION

Reference will now be made in detail to illustrative embodiments, examples of which are illustrated in the accompanying drawings. When the following description refers to the drawings, unless otherwise indicated, the same numbers in different drawings indicate the same or similar elements. The implementations described in the following illustrative embodiments do not represent all implementations consistent with the present invention. Rather, they are merely examples of devices and methods consistent with some aspects of the present invention as detailed in the appended claims.

It should be noted that all the actions of acquiring signals, information or data in the present invention are carried out under the premise of complying with the corresponding data protection laws and policies of the country where the present invention is and obtaining authorization from the owner of the corresponding device.

In the present invention, terms such as "first" and "second" are used to distinguish similar objects without necessarily being understood as a specific order or precedence. In addition, in the description with reference to the drawings, the same reference numerals in different drawings indicate the same elements unless otherwise specified.

In the description of the present invention, unless otherwise specified, "a plurality of" means two or more, and other quantifiers are similar to this. The expression "at least one of the following items" or other similar expressions refer to any combination of these items, including any combination of singular items or plural items. For example, at least one of a, b, or c can mean: a, b, c, a-b, a-c, b-c, or a-b-c, where a, b, and c can be singular or plural; "and/or" is an association relationship that describes the associated objects, which means that there can be three kinds of relationships, for example, A and/or B can mean that A exists alone, A and B exist at the same time, and B exists alone, where A and B can be singular or plural.

Although the operations are described in a specific order in the drawings in the embodiments of the present invention, it should not be construed as requiring that these operations be performed in the specific order or serial order shown, or that all the operations shown be performed, to acquire the desired results. In certain circumstances, multitasking and parallel processing may be beneficial.

In the related art, the user equipment can exchange messages with an application function (AF) entity based on AKMA, and determine the access authority of the user equipment to the application function AF entity, so as to establish a secure session with the application function AF entity. However, the message interaction caused by a plurality of user equipment will increase the load of the application function AF entity and reduce the efficiency of the application function AF entity. Moreover, when there exist a plurality of application function AF entities in the network, direct message interaction of the UE with the AF to determine the access authority will also reduce the efficiency for the UE.

In order to solve the above problems, the present invention provides an authentication method, an authentication apparatus, a medium and a chip.

First, the implementation environment of embodiments of the present invention will be introduced.

Embodiments of the present invention may be applied to a 4G (the 4th Generation) network system, such as a Long Term Evolution (LTE) system, or it may also be applied to a 5G (the 5th Generation) network system, such as an access network adopting a New Radio Access Technology (New RAT); a Cloud Radio Access Network (CRAN) or other communication systems.

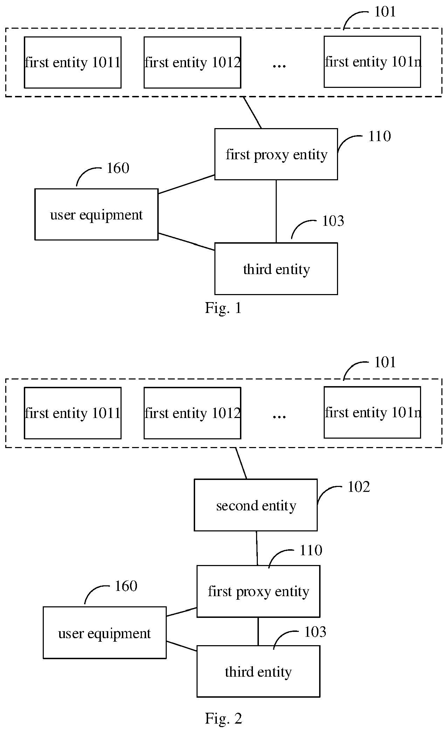

Fig. 1 is a schematic diagram of a communication system to which embodiments of the present invention are applicable according to an illustrative embodiment. It should be noted that embodiments of the present invention are not limited by the system shown in Fig. 1, and in addition, the entities in Fig. 1 may be hardware, software divided in terms of functions or a combination thereof. The entities shown in Fig. 1 may be entities in any communication network architecture, and the communication network may be a 4G network, a 5G network or a 6G network, etc.

As shown in Fig. 1, the communication system may include: a first entity 101, a third entity 103, a first proxy entity 110 and a user equipment 160, and the first entity 101 may include one or more entities, for example, the first entity 101 may include: a first entity 1011, a first entity 1012, ..., a first entity 101n, and the like. The first proxy entity 110 may be connected with the one or more first entities 101 (for example, through a wired network, a wireless network or a combination of both), and the first proxy entity may be connected with the third entity, and the user equipment may be connected with the first proxy entity and the third entity.

In some embodiments, the first entity 101 may include a trusted entity providing an application function inside a 3GPP operator domain, the first proxy entity 110 may include a trusted entity providing an authentication proxy function inside the 3GPP operator domain, and the third entity 103 may include an entity providing AKMA authorization and application key derivation functions, for example, the third entity 103 may be a functional entity that provides an AKMA anchor function and authenticates a communication authority between the user equipment and the first entity.

For example, the first entity may include: an application function (AF) entity or a service capability server SCS/application server AS; the first proxy entity may include an authentication proxy AP (AKMA authentication proxy) entity; and the third entity may include: an AKMA anchor function AAnF entity.

In some embodiments, the first entity may include a trusted entity providing an application function inside the 3GPP operator domain, the first proxy entity may include a trusted entity providing an authentication function inside the 3GPP operator domain, and the first proxy entity provide an authentication proxy function for the first entity, and the first entity may include one or more entities.

Fig. 2 is a schematic diagram of another communication system to which embodiments of the present invention are applicable according to an illustrative embodiment. As shown in Fig. 2, the communication system may include: a first entity 101, a second entity 122, a third entity 103, a first proxy entity 110 and a user equipment 160, and the first entity 101 may include one or more entities. The second entity 102 may be connected with the one or more first entities 101 (for example, through a wired network, a wireless network, or a combination of both), the first proxy entity may be connected with the second entity and the third entity, and the user equipment may be connected with the first proxy entity and the third entity.

In Fig. 2, the first entity 101 may include an untrusted entity providing an application function outside the 3GPP operator domain, for example, an application function (AF) entity or a service capability server SCS/application server AS; the first proxy entity 110 may include a trusted entity providing an authentication proxy function inside the 3GPP operator domain, for example, an authentication proxy AP (AKMA authentication proxy) entity; and the third entity 103 may include an entity that provides AKMA authorization and application key derivation functions, for example, an AKMA anchor function AAnF entity. The second entity may include an entity providing a network exposure function, for example, a network exposure function (NEF) entity or a service capability exposure function (SCEF) entity.

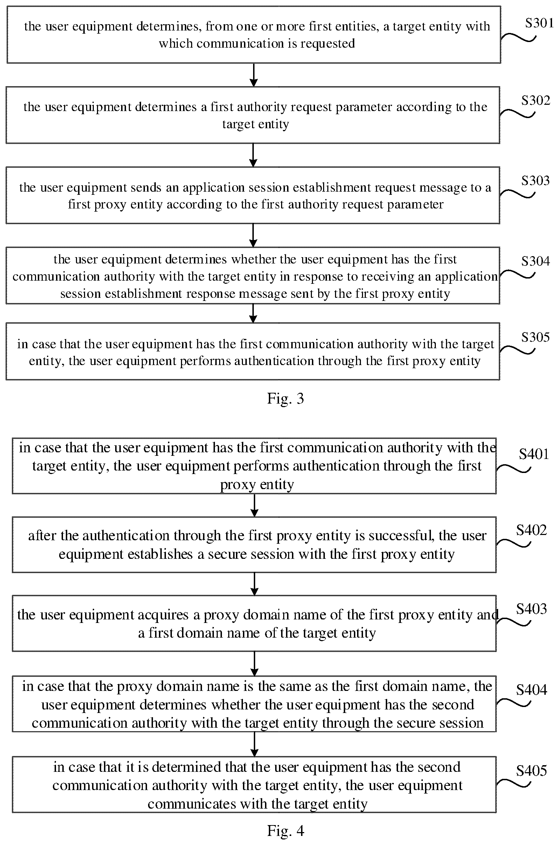

Fig. 3 shows an authentication method according to an illustrative embodiment, which may be applied to the user equipment in the above communication system. As shown in Fig. 3, the method may include the following operations.

In S301, the user equipment determines, from one or more first entities, a target entity with which communication is requested.

For example, the first entity may include an entity providing an application function, such as an application function AF entity. The user equipment can determine, according to the user's functional requirements, an AF entity with which communication is requested.

In S302, the user equipment determines a first authority request parameter according to the target entity.

In some embodiments, a first target entity identifier of the target entity may be acquired first, and the first authority parameter may be determined according to the first target entity identifier.

For example, the first target entity identifier may include one or more of: a Fully Qualified Domain Name (FQDN), an Internet Protocol (IP) address and a Port Number of the target entity.

In some embodiments, the first authority request parameter may be acquired according to the first target entity identifier and a user equipment identifier representing the identity of the user equipment.

The user equipment identifier may include a key identifier A-KID corresponding to the user equipment, the key identifier A-KID may be derived according to hardware information of the user equipment and registration information sent by the communication system when the user equipment registers to access the communication system, and the key identifier A-KID may uniquely identify one user equipment in the communication system.

For example, the first target entity identifier and the key identifier A-KID corresponding to the user equipment may be used as the first authority request parameter.

In S303, the user equipment sends an application session establishment request message to a first proxy entity according to the first authority request parameter.

The application session establishment request message may be configured to instruct the first proxy entity to determine whether the user equipment has a first communication authority with the target entity according to the first authority request parameter.

In some embodiments, the first proxy entity is connected with one or more first entities. For example, a unified first proxy entity may be set in a trust domain or an edge node, and the first proxy entity can be connected with each first entity in the trust domain or the edge node. In a case that the user equipment requests to communicate with the target entity in the trust domain or the edge node, an application session establishment request message may be sent to the first proxy entity.

In some embodiments, the first entity may include an entity providing an application function (such as a trusted entity providing an application function inside a 3GPP operator domain, or an untrusted entity providing an application function outside the 3GPP operator domain), the first proxy entity may include a trusted entity providing an authentication function inside the 3GPP operator domain, and the first proxy entity provides an authentication proxy function for the first entity, and one or more first entities may be provided.

In some embodiments, the user equipment may be pre-configured with a proxy domain name (e.g., FQDN) of the first proxy entity, and the user equipment is able to perform message interaction or data transmission with the first proxy entity through the FQDN.

In S304, the user equipment determines whether the user equipment has the first communication authority with the target entity in response to receiving an application session establishment response message sent by the first proxy entity.

In some embodiments, the user equipment may determine that the user equipment has the first communication authority with the target entity in a case that the application session establishment response message is received.

On the contrary, if the user equipment does not receive the application session establishment response message within a preset time, it can be determined that the user equipment does not have the first communication authority with the target entity.

In some other embodiments, the user equipment may determine that the user equipment has the first communication authority with the target entity in a case that the user equipment receives the application session establishment response message, and the application session establishment response message includes success indication information.

On the contrary, if the application session establishment response message received by the user equipment does not include the success indication information or includes failure indication information, it can be determined that the user equipment does not have the first communication authority with the target entity. The success indication information may be any indication information set in advance.

In some other embodiments, the user equipment may determine that the user equipment has the first communication authority with the target entity in a case that the user equipment receives the application session establishment response message, and the application session establishment response message does not include the failure indication information.

On the contrary, if the application session establishment response message received by the user equipment includes the failure indication information, it can be determined that the user equipment does not have the first communication authority with the target entity. The failure indication information may be any error code set in advance.

In S305, in a case that the user equipment has the first communication authority with the target entity, the user equipment performs authentication through the first proxy entity.

For example, the user equipment is able to derive an entity key K_{AF} corresponding to the target entity based on the FQDN of the target entity, and perform the authentication with the first proxy entity based on the entity key K_{AF}.

It should be noted that the way for the user equipment to perform the authentication can refer to the implementation in the related art, for example, the authentication may be performed based on the entity key information corresponding to the target entity, or the authentication may be performed based on user key information corresponding to the user equipment and the entity key information corresponding to the target entity, which is not limited in the present invention.

By adopting the above method, the target entity with which communication is requested is determined from one or more first entities; the first authority request parameter is determined according to the target entity; the application session establishment request message is sent to the first proxy entity according to the first authority request parameter; it is determined whether the user equipment has the first communication authority with the target entity in response to receiving the application session establishment response message sent by the first proxy entity; and in a case that the user equipment has the first communication authority with the target entity, the authentication is performed through the first proxy entity. The application session establishment request message is configured to instruct the first proxy entity to determine whether the user equipment has the first communication authority with the target entity according to the first authority request parameter; the first entity may include the entity providing the application function, the first proxy entity may include the trusted entity providing the authentication function inside the 3GPP operator domain, and the first proxy entity provides the authentication proxy function for the first entity. In this way, the trusted first proxy entity inside the 3GPP operator domain may determine whether the user equipment has the first communication authority with the first entity, and perform the UE authentication in a case that the user equipment has the first communication authority, so that part of functions of the first entity can be realized through the first proxy entity, thereby reducing the load of the first entity and improving the efficiency of the first entity. Moreover, the user equipment realizes the authorization and authentication with one or more first entities through the unified first proxy entity, which also reduces the complexity of UE authentication and improves the efficiency of the user equipment.

In some embodiments, the first communication authority may include one or more of the following authorities.

Authority 1: the user equipment has an access authority to the target entity.

Authority 2: the user equipment has an access authority to the first proxy entity.

Authority 3: the first proxy entity has a proxy authority to the target entity.

Authority 4: the target entity has an acquisition authority to an identity of the subscriber of the user equipment.

For example, it may be determined that the user equipment has the first communication authority with the target entity in a case that it is determined that the user equipment has the access authority to the target entity; it may also be determined that the user equipment has the first communication authority with the target entity in a case that it is determined that the user equipment has the access authority to the first proxy entity and the first proxy entity has the proxy authority to the target entity; or it may also be determined that the user equipment has the first communication authority with the target entity in a case that it is determined that the user equipment has the access authority to the target entity, the user equipment has the access authority to the first proxy entity, and the first proxy entity has the proxy authority to the target entity.

In some embodiments, the user equipment having the first communication authority with the target entity may include that the user equipment has the access authority to the first proxy entity, and the first proxy entity has the proxy authority to the target entity. For example, in a case that the FQDN of the first proxy entity is the same as that of the target entity, the first communication authority can be used.

In some other embodiments, the user equipment having the first communication authority with the target entity may include that the user equipment has the access authority to the target entity, the user equipment has the access authority to the first proxy entity, and the first proxy entity has the proxy authority to the target entity. For example, in a case that the FQDN of the first proxy entity is different from that of the target entity, the first communication authority can be used.

In some embodiments, the first proxy entity may include a trusted authentication proxy AP entity inside the 3GPP operator domain.

In some embodiments, the first entity may include a trusted entity providing an application function inside the 3GPP operator domain. For example, the first entity may include: a trusted application function AF entity inside the 3GPP operator domain or a trusted service capability server SCS/application server AS entity inside the 3GPP operator domain.

In some other embodiments, the above first entity may include an untrusted entity providing an application function outside the 3GPP operator domain, the first proxy entity may communicate with the first entity through a second entity; the second entity may include an entity providing a network exposure function. For example, the first entity may include: an untrusted application function AF entity outside the 3GPP operator domain, or an untrusted service capability server SCS/application server AS entity outside the 3GPP operator domain; and the second entity may include: a network exposure function NEF entity or a service capability exposure function SCEF entity.

In this way, the user equipment can communicate with the AF entity outside the operator domain through the AP.

In some embodiments, after the authentication through the first proxy entity is successful, the user equipment can communicate with the target entity.

For example, the user equipment can communicate with the target entity directly or through the first proxy entity, for example, a communication message between the user equipment and the target entity is forwarded through the first proxy entity.

In some other embodiments, after the authentication through the first proxy entity is successful, the user equipment can also determine whether a proxy domain name of the first proxy entity is the same as a first domain name of the target entity, and can communicate with the target entity in a case that the proxy domain name is different from the first domain name.

On the contrary, in a case that the proxy domain name is the same as the first domain name, whether the user equipment has a second communication authority with the target entity may be further determined through a secure session between the user equipment and the proxy entity; and in a case that the user equipment has the second communication authority, the user equipment can communicate with the target entity.

It should be noted that the proxy domain name may be a fully qualified domain name FQDN corresponding to the first proxy entity, and the first domain name may be a fully qualified domain name FQDN corresponding to the target entity. In some scenarios, the first proxy entity and the target entity can use the same FQDN, but different IP addresses or port numbers. In this scenario, the first communication authority can indicate that the user equipment has the access authority to the FQDN, but not necessarily indicate that the user equipment has the access authority to the target entity corresponding to the IP address or port number. At this time, it may be further determined whether the user equipment has the second communication authority with the target entity through the secure session between the user equipment and the proxy entity.

Fig. 4 shows an authentication method according to an illustrative embodiment, which may be applied to the user equipment. As shown in Fig. 4, the method may include the following operations.

In S401, in a case that the user equipment has the first communication authority with the target entity, the user equipment performs authentication through the first proxy entity.

In S402, after the authentication through the first proxy entity is successful, the user equipment establishes a secure session with the first proxy entity.

For example, the secure session may be a transport layer security (TLS) session, through which confidentiality and data integrity can be achieved for the communication between the user equipment and the first proxy entity.

In S403, the user equipment acquires a proxy domain name of the first proxy entity and a first domain name of the target entity.

In some embodiments, the proxy domain name may be the fully qualified domain name FQDN corresponding to the first proxy entity, and the first domain name may be the fully qualified domain name FQDN corresponding to the target entity.

In S404, in a case that the proxy domain name is the same as the first domain name, the user equipment determines whether the user equipment has the second communication authority with the target entity through the secure session.

In S405, in a case that it is determined that the user equipment has the second communication authority with the target entity, the user equipment communicates with the target entity.

Similarly, the user equipment can communicate with the target entity directly or through the first proxy entity, for example, the communication message between the user equipment and the target entity is forwarded through the first proxy entity.

In this way, by authenticating the first communication authority and the second communication authority, it can also be determined that the user equipment has the access authority to the target entity in a case that the FQDN of the first proxy entity is the same as that of the target entity, thereby further enhancing security.

In some embodiments, determining whether the user equipment has the second communication authority with the target entity through the secure session in step S404 may include the following operations.

Firstly, the user equipment sends a target entity service request message to the first proxy entity through the secure session.

For example, the target entity service request message may include a second target entity identifier, which is a protected entity identifier acquired by the user equipment according to the first target entity identifier. The target entity service request message is used to instruct the first proxy entity to determine whether the user equipment has the second communication authority with the target entity according to the second target entity identifier.

In some embodiments, the second target entity identifier is an identifier determined after protecting the first target entity identifier corresponding to the target entity according to the requirements of the secure session (such as the TLS session).

In some other embodiments, the first target entity identifier can also be directly used as the second target entity identifier, and the second target entity identifier can be transmitted through the secure session, so as to protect the first target entity identifier and prevent the entity identifier from being tampered with during transmission.

Then, in response to receiving a target entity service response message sent by the first proxy entity, the user equipment determines whether the user equipment has the second communication authority with the target entity.

In some embodiments, the user equipment may determine that the user equipment has the second communication authority with the target entity in a case that the user equipment receives the target entity service response message.

On the contrary, in a case that the user equipment does not receive the target entity service response message within a preset time, it can be determined that the user equipment does not have the second communication authority with the target entity.

In some other embodiments, the user equipment may determine that the user equipment has the second communication authority with the target entity in a case that the user equipment receives the target entity service response message, and the target entity service response message contains success indication information.

On the contrary, in a case that the target entity service response message received by the user equipment does not contain the success indication information or contains failure indication information, it can be determined that the user equipment does not have the second communication authority with the target entity. The success indication information can be any indication information set in advance.

In some other embodiments, the user equipment may determine that the user equipment has the second communication authority with the target entity in a case that the user equipment receives the target entity service response message, and the target entity service response message does not contain the failure indication information.

On the contrary, in a case that the target entity service response message received by the user equipment contains the failure indication information, it can be determined that the user equipment does not have the second communication authority with the target entity. The failure indication information can be any error code set in advance.

In this way, the user equipment can determine whether the user equipment has the second communication authority with the target entity through the secure session.

In some embodiments, the second communication authority may include one or more of the following authorities.

Authority 6: the user equipment has an access authority to the target entity.

Authority 7: the first proxy entity has a proxy authority to the target entity.

Authority 8: the target entity has an acquisition authority to the identity of the subscriber of the user equipment.

In this way, it can be determined whether the user equipment has the second communication authority with the target entity through the secure session between the user equipment and the first proxy entity, thus further improving the reliability of authentication.

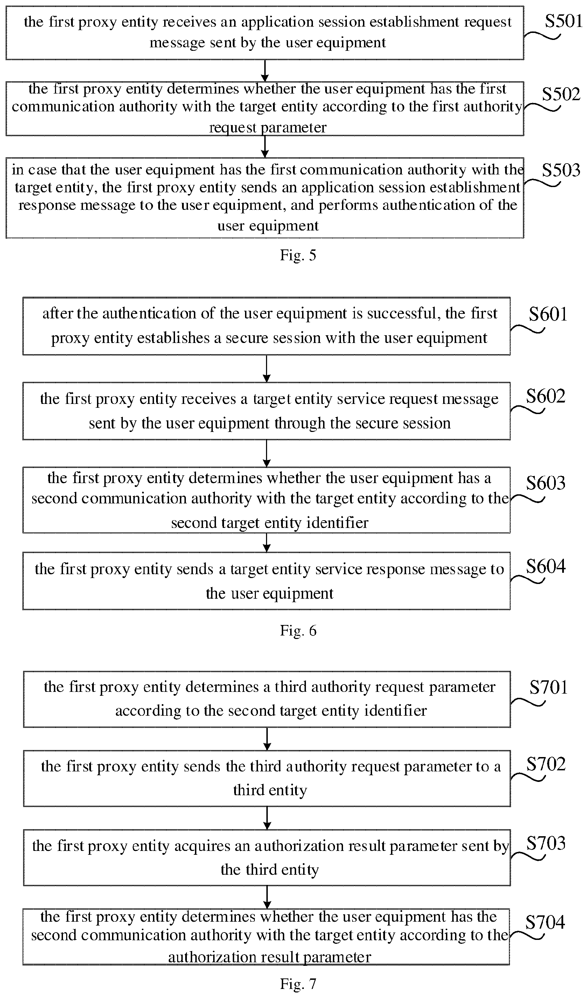

Fig. 5 shows an authentication method according to an illustrative embodiment, which may be applied to the first proxy entity in the communication system. As shown in Fig. 5, the method may include the following operations.

In S501, the first proxy entity receives an application session establishment request message sent by the user equipment.

The application session establishment request message includes a first authority request parameter, and the application session establishment request message is configured to instruct the first proxy entity to determine whether the user equipment has a first communication authority with a target entity according to the first authority request parameter, the target entity is an entity which is determined from one or more first entities by the user equipment and with which communication is requested, and the first entity may include an entity providing an application function, the first proxy entity may include a trusted entity providing an authentication function inside the 3GPP operator domain, the first proxy entity provides an authentication proxy function for the first entity, and one or more first entities may be provided.

In S502, the first proxy entity determines whether the user equipment has the first communication authority with the target entity according to the first authority request parameter.

In this way, the trusted first proxy entity inside the 3GPP operator domain may determine whether the user equipment has the first communication authority with the first entity, and perform the UE authentication in a case that the user equipment has the first communication authority, so that part of functions of the first entity can be realized through the first proxy entity, thereby reducing the load of the first entity and improving the efficiency of the first entity. Moreover, the user equipment realizes the authorization and authentication with one or more first entities through the unified first proxy entity, which also reduces the complexity of UE authentication and improves the efficiency of the user equipment.

In some embodiments, the first proxy entity can determine whether the user equipment has the first communication authority with the target entity through message interaction with a third entity, which for example may include the following operations.

First, the first proxy entity determines a second authority request parameter according to the first authority request parameter.

In some embodiments, the first authority request parameter and a proxy entity identifier corresponding to the first proxy entity may be used as the second authority request parameter. For example, if the first authority request parameter includes a first target entity identifier of the target entity and a key identifier A-KID corresponding to the user equipment, the second authority request parameter may include the first target entity identifier, the key identifier A-KID, and the proxy entity identifier corresponding to the first proxy entity.

In some other embodiments, the first authority request parameter may be used as the second authority request parameter.

Secondly, the first proxy entity sends the second authority request parameter to the third entity.

For example, the third entity may include an entity providing AKMA authorization and application key derivation functions. The second authority request parameter may be configured to instruct the third entity to determine whether the user equipment has the first communication authority with the target entity.

Thirdly, the first proxy entity acquires first pending key information sent by the third entity.

The first pending key information is key information acquired by the third entity according to the second authority request parameter

In some embodiments, the first pending key information may include an application key K_{AF} corresponding to the target entity.

In some other embodiments, the first pending key information may include the application key K_{AF} and a key expiration time (K_{AF} expiration time) corresponding to the target entity.

In some embodiments, the first proxy entity may send the second authority request parameter to the third entity via a first key request message; the first key request message is configured to instruct the third entity to acquire the first pending key information and an identity of the subscriber of the user equipment; the first proxy entity may also receive a first key response message sent by the third entity; and acquire the first pending key information included in the first key response message.

Further, the first key response message may also include a second identity of the subscriber corresponding to the user equipment, and the first proxy entity may acquire the second identity of the subscriber according to the first key response message received. The second identity of the subscriber may include a subscription permanent identifier SUPI corresponding to the user equipment.

In some embodiments, the first proxy entity may send the second authority request parameter to the third entity via a second key request message; the second key request message is configured to indicate that the first proxy entity requests to acquire the first pending key information; the first proxy entity may also receive a second key response message sent by the third entity; and acquire the first pending key information included in the second key response message. Finally, the first proxy entity determines whether the user equipment has the first communication authority with the target entity according to the first pending key information.

For example, in a case that the first pending key information includes the application key K_{AF} corresponding to the target entity, it can be determined that the user equipment has the first communication authority with the target entity. On the contrary, in a case that the first pending key information does not include the application key K_{AF} corresponding to the target entity, or in a case that the first pending key information does not include the valid application key K_{AF}, or in a case that the first pending key information is not received within a preset time, it can be determined that the user equipment does not have the first communication authority with the target entity.

In this way, the first proxy entity can determine whether the user equipment has the first communication authority with the target entity through interaction with the third entity.

In some other embodiments, in a case that the first proxy entity stores a communication authority policy of the user equipment, it can be directly determined whether the user equipment has the first communication authority with the target entity according to the first authority request parameter.

In S503, in a case that the user equipment has the first communication authority with the target entity, the first proxy entity sends an application session establishment response message to the user equipment, and performs UE authentication.

In some embodiments, the first proxy entity may indicate that the user equipment has the first communication authority with the target entity by sending the application session establishment response message. On the contrary, by not sending the application session establishment response message, the first proxy entity may indicate that the user equipment does not have the first communication authority with the target entity.

In some other embodiments, the first proxy entity may include success indication information in the application session establishment response message, and it is indicated through the success indication information that the user equipment has the first communication authority with the target entity. On the contrary, by not including the success indication information in the application session establishment response message, it is indicated that the user equipment does not have the first communication authority with the target entity. The success indication information may be any indication information set in advance.

In some other embodiments, in a case that the user equipment does not have the first communication authority with the target entity, the first proxy entity may include failure indication information in the application session establishment response message to indicate that the user equipment does not have the first communication authority with the target entity. On the contrary, in a case that the user equipment has the first communication authority with the target entity, the first proxy entity may indicate that the user equipment has the first communication authority with the target entity by not including the failure indication information in the application session establishment response message.

By adopting the above method, the authentication between the user equipment and the first entity can be realized through the first proxy entity, so that the problem of excessive load of the first entity caused by the authentication can be overcome.

In some embodiments, the first communication authority may include one or more of the following authorities.

Authority 1: the user equipment has an access authority to the target entity.

Authority 2: the user equipment has an access authority to the first proxy entity.

Authority 3: the first proxy entity has a proxy authority to the target entity.

Authority 4: the target entity has an acquisition authority to an identity of the subscriber of the user equipment.

In some embodiments, the above first proxy entity may include a trusted authentication proxy AP entity inside the 3GPP operator domain.

In some embodiments, the above first entity may include: a trusted application function AF entity inside the 3GPP operator domain, a trusted service capability server SCS/application server AS entity inside the 3GPP operator domain, an untrusted application function AF entity outside the 3GPP operator domain, or an untrusted service capability server SCS/application server AS entity outside the 3GPP operator domain.

In some embodiments, the above second entity may include: a network exposure function NEF entity or a service capability exposure function SCEF entity.

In some embodiments, the above third entity may include: an AKMA anchor function AAnF entity.

In some embodiments, in a case that the UE authentication through the first proxy entity is successful, the first proxy entity may notify the target entity of a first authentication result of the authentication. The first authentication result is configured to indicate that the user equipment has a communication authority with the target entity.

For example, in a case that the target entity is a trusted entity providing an application function inside the 3GPP operator domain, the first proxy entity may send a first notification message to the target entity, and the first notification message may include the first authentication result. Further, in a case that the first proxy entity acquires a second identity of the subscriber of the user equipment (for example, the second identity of the subscriber is acquired through the first key response message), the first notification message may also include the second identity of the subscriber.

For another example, in a case that the target entity is an untrusted entity providing an application function outside the 3GPP operator domain, the first proxy entity may send a second notification message to the second entity according to the first authentication result to instruct the second entity to send the first authentication result to the target entity. Similarly, in a case that the first proxy entity acquires the second identity of the subscriber of the user equipment (for example, the second identity of the subscriber is acquired through the first key response message), the second notification message may also include the second identity of the subscriber.

Further, the authentication result notification message may also include the first identity of the subscriber corresponding to the user equipment. For example, in a case that the first key response message includes the first identity of the subscriber corresponding to the user equipment, the first proxy entity may send the first identity of the subscriber to the target entity via the authentication result notification message.

It should be noted that the first identity of the subscriber may be any identifier for representing the user equipment, for example, it may be a generic public subscription identifier GPSI corresponding to the user equipment.

In this way, the first proxy entity can verify the communication authority between the user equipment and the first entity, and instruct the user equipment to communicate with the first entity in a case that the user equipment has the communication authority with the first entity.

In some other embodiments, in a case that the UE authentication through the first proxy entity is successful, the first proxy entity can acquire the proxy domain name of the first proxy entity and the first domain name of the target entity; in a case that the proxy domain name is different from the first domain name, the first authentication result is notified to the target entity, so as to indicate that the target entity has the communication authority with the user equipment or the target entity communicates with the user equipment.

On the contrary, in a case that the proxy domain name is the same as the first domain name, the first proxy entity temporarily does not notify the target entity of the first authentication result, but waits for whether the user equipment has a second communication authority with the target entity, and notifies the target entity of the second authentication result after determining that the user equipment has the second communication authority with the target entity.

For example, the first proxy entity may further determine whether the user equipment has the second communication authority with the target entity according to a target entity service request message sent by the user equipment.

It should also be noted that the proxy domain name may be a fully qualified domain name FQDN corresponding to the first proxy entity, and the first domain name may be a fully qualified domain name FQDN corresponding to the target entity. In some scenarios, the first proxy entity and the target entity can use the same FQDN, but different IP addresses or port numbers. In this scenario, the first communication authority can indicate that the user equipment has the access authority to the FQDN, but not necessarily indicate that the user equipment has the access authority to the target entity corresponding to the IP address or port number. At this time, it may be further determined whether the user equipment has the second communication authority with the target entity through a secure session between the user equipment and the proxy entity.

Fig. 6 shows an authentication method according to an illustrative embodiment, which may be applied to the first proxy entity. As shown in Fig. 6, the method may include the following operations.

In S601, after the UE authentication is successful, the first proxy entity establishes a secure session with the user equipment.

For example, the secure session may be a transport layer security (TLS) session, through which confidentiality and data integrity can be achieved for the communication between the first proxy entity and the user equipment.

In S602, the first proxy entity receives a target entity service request message sent by the user equipment through the secure session.

The target entity service request message includes a second target entity identifier, which is a protected entity identifier acquired by the user equipment according to the first target entity identifier of the target entity, and the target entity service request message is a message sent by the user equipment when determining that a proxy domain name of the first proxy entity is the same as a first domain name of the target entity.

In S603, the first proxy entity determines whether the user equipment has a second communication authority with the target entity according to the second target entity identifier.

In some embodiments, it may be determined that the user equipment has the second communication authority with the target entity in a case that the second target entity identifier is the same as the first target entity identifier.

In some other embodiments, in a case that the second target entity identifier is different from the first target entity identifier, the first proxy entity may determine whether the user equipment has the second communication authority with the target entity through message interaction with the third entity.

In S604, the first proxy entity sends a target entity service response message to the user equipment.

The target entity service response message is configured to indicate whether the user equipment has the second communication authority with the target entity.

In some embodiments, the first proxy entity may indicate that the user equipment has the second communication authority with the target entity by sending the target entity service response message. On the contrary, by not sending the target entity service response message, the first proxy entity indicates that the user equipment does not have the second communication authority with the target entity.

In some other embodiments, the first proxy entity may include success indication information in the target entity service response message, and indicate that the user equipment has the second communication authority with the target entity through the success indication information. On the contrary, by not including the success indication information in the target entity service response message, it indicates that the user equipment does not have the second communication authority with the target entity. The success indication information may be any indication information set in advance.

In some other embodiments, in a case that the user equipment does not have the second communication authority with the target entity, the first proxy entity may include failure indication information in the target entity service response message to indicate that the user equipment does not have the second communication authority with the target entity. On the contrary, in a case that the user equipment has the second communication authority with the target entity, the first proxy entity may indicate that the user equipment has the second communication authority with the target entity by not including the failure indication information in the target entity service response message. The failure indication information may be any error code set in advance.

In this way, the first proxy entity can determine whether the user equipment has the second communication authority with the target entity through the secure session, and send the authorization result to the target device.

In some other embodiments, the first proxy entity may determine whether the user equipment has the second communication authority with the target entity through message interaction with the third entity.

Fig. 7 shows an authentication method according to an illustrative embodiment, which may be applied to the first proxy entity. As shown in Fig. 7, in a case that the second target entity identifier is different from the first target entity identifier, the first proxy entity may determine whether the user equipment has the second communication authority with the target entity according to this method. The method may include the following operations.

In S701, the first proxy entity determines a third authority request parameter according to the second target entity identifier.

In S702, the first proxy entity sends the third authority request parameter to a third entity.

In S703, the first proxy entity acquires an authorization result parameter sent by the third entity.

In S704, the first proxy entity determines whether the user equipment has the second communication authority with the target entity according to the authorization result parameter.

With this method, when the second target entity identifier is different from the first target entity identifier, the first proxy entity may determine whether the user equipment has the second communication authority with the target entity through message interaction with the third entity.

The third authority request parameter may be configured to instruct the third entity to determine whether the user equipment has the second communication authority with the target entity; the authorization result parameter may be configured to indicate whether the user equipment has the second communication authority with the target entity. For example, the third authority request parameter may include a key identifier A-KID, a second target entity identifier, and a proxy entity identifier corresponding to the first proxy entity; and the third authority request parameter may be configured to instruct the third entity to determine whether the user equipment has the second communication authority with the target entity.

In some embodiments, the first proxy entity may send the third authority request parameter to the third entity via a third key request message; and the third key request message is configured to instruct the third entity to acquire an authorization result parameter and an identity of the subscriber of the user equipment. The first proxy entity may also receive a third key response message sent by the third entity; and acquire the authorization result parameter included in the third key response message.

Further, the third key response message also includes a second identity of the subscriber corresponding to the user equipment, and the first proxy entity may also acquire the second identity of the subscriber according to the third key response message received. The second identity of the subscriber may include a subscription permanent identifier SUPI corresponding to the user equipment.

In some embodiments, the third key request message may include an authorization indication parameter. The authorization indication parameter may be configured to instruct the third entity to determine whether the user equipment has the second communication authority with the target entity according to the third key request message. Similarly, the third key response message may also include an authorization indication parameter to indicate that the third key response message is a response to the third key request message.

In some other embodiments, the first proxy entity may send the third authority request parameter to the third entity via a fourth key request message; and the fourth key request message is configured to indicate that the first proxy entity requests to acquire the authorization result parameter. The first proxy entity may also receive a fourth key response message sent by the third entity; and acquire the authorization result parameter included in the fourth key response message.

In some embodiments, the fourth key request message further includes an authorization indication parameter, and the authorization indication parameter is configured to instruct the third entity to determine whether the user equipment has the second communication authority with the target entity according to the fourth key request message. Similarly, the fourth key response message may also include an authorization indication parameter, which is configured to indicate that the fourth key response message is a response to the fourth key request message.

In some embodiments, the authorization result parameter may be configured to indicate authorization success or authorization failure. The first proxy entity determines whether the user equipment has the second communication authority with the target entity according to the authorization result parameter. For example, when the authorization result parameter is the authorization success, it may be determined that the user equipment has the second communication authority with the target entity. On the contrary, when the authorization result parameter is the authorization failure, or the above key response message (for example, the third key response message or the fourth key response message) does not include the authorization result parameter, it may be determined that the user equipment does not have the second communication authority with the target entity.

In some embodiments, the second communication authority may include one or more of the following authorities.

Authority 6: the user equipment has an access authority to the target entity.

Authority 7: the first proxy entity has a proxy authority to the target entity.

Authority 8: the target entity has an acquisition authority to the identity of the subscriber of the user equipment.

In this way, whether the user equipment has the second communication authority with the target entity can be determined through the secure session between the user equipment and the first proxy entity, which further improves the reliability of the authentication.

In some embodiments, when it is determined that the user equipment has the second communication authority with the target entity according to the authorization result parameter, the first proxy entity may notify the target entity of the second authentication result.

The second authentication result is configured to indicate that the user equipment has the communication authority with the target entity.

For example, in a case that the target entity is a trusted entity providing an application function inside the 3GPP operator domain, the first proxy entity may send a third notification message to the target entity, and the third notification message includes the second authentication result. Further, in a case that the first proxy entity acquires the second identity of the subscriber of the user equipment (for example, the second identity of the subscriber is acquired via the third key response message), the third notification message may also include the second identity of the subscriber.

For another example, in a case that the target entity is an untrusted entity providing an application function outside the 3GPP operator domain, the first proxy entity may send a fourth notification message to the second entity according to a first authentication result to instruct the second entity to send the first authentication result to the target entity. Further, in a case that the first proxy entity acquires the second identity of the subscriber of the user equipment (for example, the second identity of the subscriber is acquired via the third key response message), the fourth notification message may also include the second identity of the subscriber.

In this way, the first proxy entity can verify the second communication authority between the user equipment and the first entity through the secure session, further improving the reliability of the authentication, and instruct the user equipment to communicate with the first entity in a case that the user equipment has the second communication authority with the first entity.

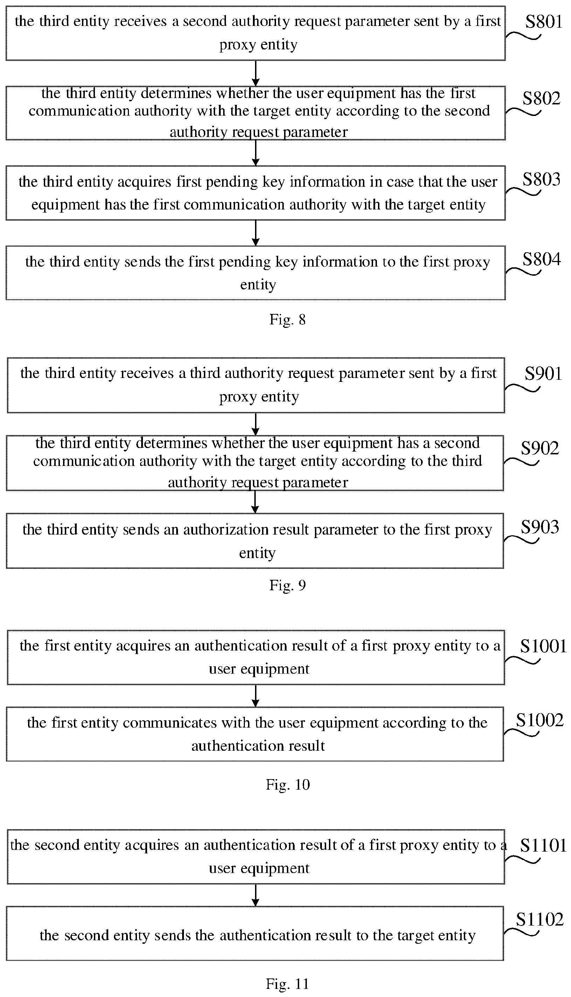

Fig. 8 shows an authentication method according to an illustrative embodiment, which may be applied to a third entity. As shown in Fig. 8, the method may include the following operations.

In S801, the third entity receives a second authority request parameter sent by a first proxy entity.

The second authority request parameter is configured to instruct the third entity to determine whether a user equipment has a first communication authority with a target entity, the target entity is an entity which is determined by the user equipment from one or more first entities and with which communication is requested, the first entity includes an entity providing an application function, the first proxy entity includes a trusted entity providing an authentication function inside a 3GPP operator domain, the first proxy entity provides an authentication proxy function for the first entity, and the third entity includes an entity that provides AKMA authorization and application key derivation functions.

In S802, the third entity determines whether the user equipment has the first communication authority with the target entity according to the second authority request parameter.

In some embodiments, the second authority request parameter may include a proxy entity identifier corresponding to the first proxy entity. After receiving the second authority request parameter, the third entity may determine whether the third entity has an authority to serve the first proxy entity according to a first preset policy. The first preset policy may include a preconfigured parameter.

In a case that it is determined that the third entity has the authority to serve the first proxy entity, it is determined according to the second authority request parameter whether the user equipment has a first communication authority with the target entity.

On the contrary, in a case that it is determined that the third entity does not have the authority to serve the first proxy entity, the flow may be terminated without checking whether the user equipment has the first communication authority with the target entity. At this time, the third entity can send a failure indication to the first proxy entity, so that the first proxy entity can perform a failure processing accordingly; or the third entity also directly stops processing and does not send any message.

In some embodiments, the second authority request parameter includes a key identifier A-KID corresponding to the user equipment, a first target entity identifier of the target entity and a proxy entity identifier corresponding to the first proxy entity. In this step, the way to determine whether the user equipment has the first communication authority with the target entity includes one or more of the following.

Way 1: it is determined, according to the key identifier A-KID and the first target entity identifier, whether the user equipment has an access authority to the target entity.

Way 2: it is determined, according to the key identifier A-KID and the proxy entity identifier, whether the user equipment has an access authority to the first proxy entity.

Way 3: it is determined, according to the proxy entity identifier and the first target entity identifier, whether the first proxy entity has a proxy authority to the target entity.

Way 4: it is determined, according to the key identifier A-KID and the first target entity identifier, whether the target entity has an acquisition authority to the identity of the subscriber of the user equipment.

Way 5: it is determined, according to the key identifier A-KID, whether the user equipment is authorized to use the AKMA.

In some embodiments, the third entity may determine that the user equipment has the first communication authority with the target entity, in a case that it is determined that the user equipment has the access authority to both the first proxy entity and the target entity, and the first proxy entity has the proxy authority to the target entity.

In some other embodiments, the third entity may determine that the user equipment has the first communication authority with the target entity, in a case that it is determined that the user equipment has the access authority to the target entity and the first proxy entity has the proxy authority to the target entity.

In S803, the third entity acquires first pending key information in a case that the user equipment has the first communication authority with the target entity.

For example, the first pending key information may be acquired according to entity key information corresponding to the target entity.

In some embodiments, the entity key information corresponding to the target entity may include an application key K_{AF} corresponding to the target entity.

In some other embodiments, the entity key information corresponding to the target entity may include the application key K_{AF} and a key expiration time (K_{AF} expiration time) corresponding to the target entity.

In S804, the third entity sends the first pending key information to the first proxy entity.

In this way, the first proxy entity determines whether the user equipment has the first communication authority with the target entity according to the first pending key information.

In some embodiments, the third entity may receive the second authority request parameter sent by the first proxy entity via a first key request message; and the first key request message is configured to instruct the third entity to acquire the first pending key information and the identity of the subscriber of the user equipment. The third entity may also send the first pending key information to the first proxy entity via a first key response message.

Further, the third entity may send the first pending key information and a second identity of the subscriber corresponding to the user equipment to the first proxy entity via the first key response message in a case that it is determined that the target entity has the authority to acquire the identity of the subscriber.

For example, the third entity sends the first pending key information and the second identity of the subscriber corresponding to the user equipment to the first proxy entity via a third key response message in a case that it is determined that the target entity has the authority to acquire the identity of the subscriber. For example, the second identity of the subscriber corresponding to the user equipment is acquired, and the second identity of the subscriber and an authorization result parameter are sent to the first proxy entity via the third key response message.

In some embodiments, the second identity of the subscriber may be an identifier representing the user equipment in the 3GPP operator domain; for example, the second identity of the subscriber may be a subscription permanent identifier SUPI corresponding to the user equipment.

In some other embodiments, the third entity may receive the second authority request parameter sent by the first proxy entity via a second key request message; and the second key request message is configured to instruct the third entity to acquire the first pending key information. The third entity may also send the first pending key information to the first proxy entity via a second key response message.

In this way, the third entity can determine whether the user equipment has the first communication authority with the target entity, and notify the first proxy entity via the first pending key information.

In some embodiments, the above first proxy entity may include a trusted authentication proxy AP entity inside the 3GPP operator domain.

In some embodiments, the above first entity may include: a trusted application function AF entity inside the 3GPP operator domain, a trusted service capability server SCS/application server AS entity inside the 3GPP operator domain, an untrusted application function AF entity outside the 3GPP operator domain, or an untrusted service capability server SCS/application server AS entity outside the 3GPP operator domain.

In some embodiments, the above third entity may include: an AKMA anchor function AAnF entity.

Fig. 9 shows an authentication method according to an illustrative embodiment, which may be applied to a third entity. As shown in Fig. 9, after sending the third key response message to the second entity, the method may further include:
In S901, the third entity receives a third authority request parameter sent by a first proxy entity.

In S902, the third entity determines whether the user equipment has a second communication authority with the target entity according to the third authority request parameter.

In S903, the third entity sends an authorization result parameter to the first proxy entity.

The authorization result parameter may be configured to notify the first proxy entity whether the user equipment has the second communication authority with the target entity.

In some embodiments, the third authority request parameter may include a proxy entity identifier corresponding to the first proxy entity. After receiving a fourth key request message, the third entity may determine whether the third entity has the authority to serve the first proxy entity according to a first preset policy. The first preset policy may include a preconfigured parameter.

In a case that it is determined that the third entity has the authority to serve the first proxy entity, it is determined according to the fourth key request message whether the user equipment has the second communication authority with the target entity.

On the contrary, in a case that it is determined that the third entity does not have the authority to serve the first proxy entity, the process may be terminated, without checking whether the user equipment has the first communication authority with the target entity. At this time, the third entity may send a failure indication to the second entity, so that the second entity performs a failure processing accordingly; or the third entity also directly stops processing and does not send any message.

In some embodiments, the third authority request parameter may include a key identifier A-KID, a second target entity identifier and a proxy entity identifier corresponding to the first proxy entity. The second target entity identifier is a protected entity identifier acquired by the user equipment according to a first proxy entity identifier of the target entity. The way for determining whether the target entity has the second communication authority with the target entity in step S902 may include one or more of the followings.

Way 6: it is determined, according to the key identifier A-KID and the second target entity identifier, whether the user equipment has an access authority to the target entity.

Way 7: it is determined, according to the proxy entity identifier and the second target entity identifier, whether the first proxy entity has a proxy authority to the target entity

Way 8: it is determined, according to the key identifier A-KID and the first target entity identifier, whether the target entity has an acquisition authority to an identity of the subscriber of the user equipment.

In some embodiments, the third entity may determine that the user equipment has the second communication authority with the target entity in a case that it is determined that the user equipment has the access authority to the target entity and the first proxy entity has the proxy authority to the target entity.

In some embodiments, the third entity may receive the third authority request parameter sent by the first proxy entity via a third key request message; and the third key request message is configured to instruct the third entity to acquire an authorization result parameter and an identity of the subscriber of the user equipment. The third entity also can send the authorization result parameter to the first proxy entity via a third key response message.

Further, the third key request message may include an authorization indication parameter, and the authorization indication parameter is configured to instruct the third entity to determine whether the user equipment has the second communication authority with the target entity according to the third key request message. Similarly, the third key response message may also include an authorization indication parameter.

Further, in a case that it is determined that the target entity has the acquisition authority to the identity of the subscriber, the third entity may send the authorization result parameter and a second identity of the subscriber corresponding to the user equipment to the first proxy entity via the third key response message.

For example, in a case that it is determined that the target entity has the acquisition authority to the identity of the subscriber, the third entity may send the authorization result parameter and the second identity of the subscriber corresponding to the user equipment to the first proxy entity via the third key response message. For example, the second identity of the subscriber corresponding to the user equipment is acquired, and the second identity of the subscriber and the authorization result parameter are sent to the first proxy entity via the third key response message.

For example, the second identity of the subscriber may include a subscription permanent identifier SUPI corresponding to the user equipment.

In some other embodiments, the third entity may receive the third authority request parameter sent by the first proxy entity via a fourth key request message; and the fourth key request message is configured to instruct the third entity to acquire the authorization result parameter. The third entity may also send the authorization result parameter to the first proxy entity via a fourth key response message.

Further, the fourth key request message may further include an authorization indication parameter, and the authorization indication parameter is configured to instruct the third entity to determine whether the user equipment has the second communication authority with the target entity according to the third key request message. Similarly, the fourth key response message may also include an authorization indication parameter to indicate that the fourth key response message is a response to the fourth key request message.

In some embodiments, the authorization result parameter may be configured to indicate authorization success or authorization failure. For example, the third entity may determine a value of the authorization result parameter based on whether the user equipment has the second communication authority with the target entity. For example, in a case that it is determined that the user equipment has the second communication authority with the target entity, the third entity may set the authorization result parameter as authorization success (for example, with the value of 1); in a case that it is determined that the user equipment does not have the second communication authority with the target entity, the third entity may set the value of the authorization result parameter as authorization failure (for example, with the value of 0).

In some other embodiments, the third entity may indicate that the user equipment does not have the second communication authority with the target entity by not including the authorization result information in the above key response message (such as the third key response message or the fourth key response message). For example, in a case that the third entity determines that the user equipment does not have the second communication authority with the target entity, the authorization result information may not be included in the above key response message. On the contrary, in a case that it is determined that the user equipment has the second communication authority with the target entity, the authorization result information may be included in the above key response message.

Fig. 10 shows an authentication method according to an illustrative embodiment, which may be applied to the first entity. As shown in Fig. 10, the method may also include the following operations.

In S1001, the first entity acquires an authentication result of a first proxy entity to a user equipment.

In S1002, the first entity communicates with the user equipment according to the authentication result.

The authentication result includes a first authentication result or a second authentication result, the first authentication result is configured to indicate that the user equipment has a first communication authority with the target entity; the second authentication result is configured to indicate that the user equipment has a second communication authority with the target entity; the target entity is an entity which is determined by the user equipment from one or more first entities and with which communication is requested, the first entity includes an entity providing an application function, the first proxy entity includes a trusted entity providing an authentication function inside a 3GPP operator domain, and the first proxy entity provides an authentication proxy function for the first entity.

It should be noted that the first entity may wait for the user equipment to initiate communication; or the first entity may actively initiate communication with the user equipment, which is not limited in the present invention.

In some embodiments, an authentication result notification message includes a first identity of the subscriber of the user equipment. The first identity of the subscriber may be an identifier representing the user equipment outside the 3GPP operator domain. For example, the first identity of the subscriber is a generic public subscription identifier GPSI corresponding to the user equipment.

In a case that the target entity is a trusted entity providing an application function inside the 3GPP operator domain, the target entity may receive a first notification message sent by the first proxy entity, and the first notification message includes the first authentication result; or the target entity may receive a third notification message, and the third notification message includes the second authentication result.

Further, the first notification message or the third notification message further includes a second identity of the subscriber corresponding to the user equipment. The second identity of the subscriber may include a subscription permanent identifier SUPI correspond to the user equipment.

In a case that the target entity is an untrusted entity providing the application function outside the 3GPP operator domain, the target entity may receive a fifth notification message sent by a second entity, the fifth notification message includes the first authentication result, and the fifth notification message is a message sent by the second entity in response to receiving a second notification message; or the target entity may receive a sixth notification message sent by the second entity, the sixth notification message includes the second authentication result, and the fifth notification message is a message sent by the second entity in response to receiving a fourth notification message.

Further, the fifth notification message or the sixth notification message further includes a first identity of the subscriber of the user equipment. The first identity of the subscriber may be a generic public subscription identifier GPSI corresponding to the user equipment.

In some embodiments, the first proxy entity may include a trusted authentication proxy AP entity inside the 3GPP operator domain.

In some embodiments, the first entity may include: a trusted application function AF entity inside the 3GPP operator domain, a trusted service capability server SCS/application server AS entity inside the 3GPP operator domain, an untrusted application function AF entity outside the 3GPP operator domain, or an untrusted service capability server SCS/application server AS entity outside the 3GPP operator domain.

In some embodiments, the second entity may include: a network exposure function NEF entity or a service capability exposure function SCEF entity.

In this way, the first entity can determine whether the user equipment has the first communication authority with the first entity according to the authentication result notification message of the first proxy entity, thereby reducing the load of the first entity and improving the efficiency of the first entity.

Fig. 11 shows an authentication method according to an illustrative embodiment, which may be applied to the second entity. As shown in Fig. 11, the method may include the following operations:

In S1101, the second entity acquires an authentication result of a first proxy entity to a user equipment.

The authentication result includes a first authentication result or a second authentication result, the first authentication result is configured to indicate that the user equipment has a first communication authority with a target entity; the second authentication result is configured to indicate that the user equipment has a second communication authority with the target entity; the target entity is an entity which is determined by the user equipment from one or more first entities and with which communication is requested, the first entity includes an untrusted entity providing an application function outside a 3GPP operator domain, the first proxy entity includes a trusted entity providing an authentication function inside the 3GPP operator domain, and the first proxy entity provides an authentication proxy function for the first entity.

In S1102, the second entity sends the authentication result to the target entity.

As a result, the target entity can communicate with the user equipment according to the authentication result.

By adopting the above method, communication between the first proxy entity inside the 3GPP operator domain and the first entity outside the 3GPP operator domain can be realized through the second entity.

In some embodiments, the above second entity may include: a network exposure function NEF entity or a service capability exposure function SCEF entity; the above first proxy entity may include a trusted authentication proxy AP entity inside the 3GPP operator domain; the above first entity may include: an untrusted application function AF entity outside the 3GPP operator domain, or an untrusted service capability server SCS/application server AS entity outside the 3GPP operator domain.

In some embodiments, the second entity may receive a second notification message sent by the first proxy entity; acquire the first authentication result according to the second notification message; and send a fifth notification message to the first entity according to the first authentication result. The second notification message is a message sent by the first proxy entity to the second entity according to the first authentication result in a case that the target entity is an untrusted entity providing an application function outside the 3GPP operator domain.

Further, in a case that the second notification message includes a second identity of the subscriber corresponding to the user equipment, the second entity may acquire a first identity of the subscriber corresponding to the user equipment according to the second identity of the subscriber; and send the fifth notification message to the first entity according to the first authentication result and the first identity of the subscriber.

In some other embodiments, the second entity may receive a fourth notification message sent by the first proxy entity; acquire the second authentication result according to the second notification message; and send a sixth notification message to the first entity according to the second authentication result. The fourth notification message is a message sent by the first proxy entity to the second entity according to the second authentication result in a case that the target entity is an untrusted entity providing an application function outside the 3GPP operator domain.

Further, in a case that the fourth notification message includes a second identity of the subscriber corresponding to the user equipment, the second entity may acquire a first identity of the subscriber corresponding to the user equipment according to the second identity of the subscriber; and send the sixth notification message to the first entity according to the second authentication result and the first identity of the subscriber.

In some embodiments, the second identity of the subscriber may be an identifier representing the user equipment inside the 3GPP operator domain; and the first identity of the subscriber may be an identifier representing the user equipment outside the 3GPP operator domain. For example, the second identity of the subscriber may be a subscription permanent identifier SUPI corresponding to the user equipment; and the first identity of the subscriber may be a generic public subscription identifier GPSI corresponding to the user equipment.

The second entity may determine the first identity of the subscriber corresponding to the second identity of the subscriber according to a preset identifier correspondence relationship; and the preset identifier correspondence relationship includes a correspondence relationship between the second identity of the subscriber and the first identity of the subscriber.

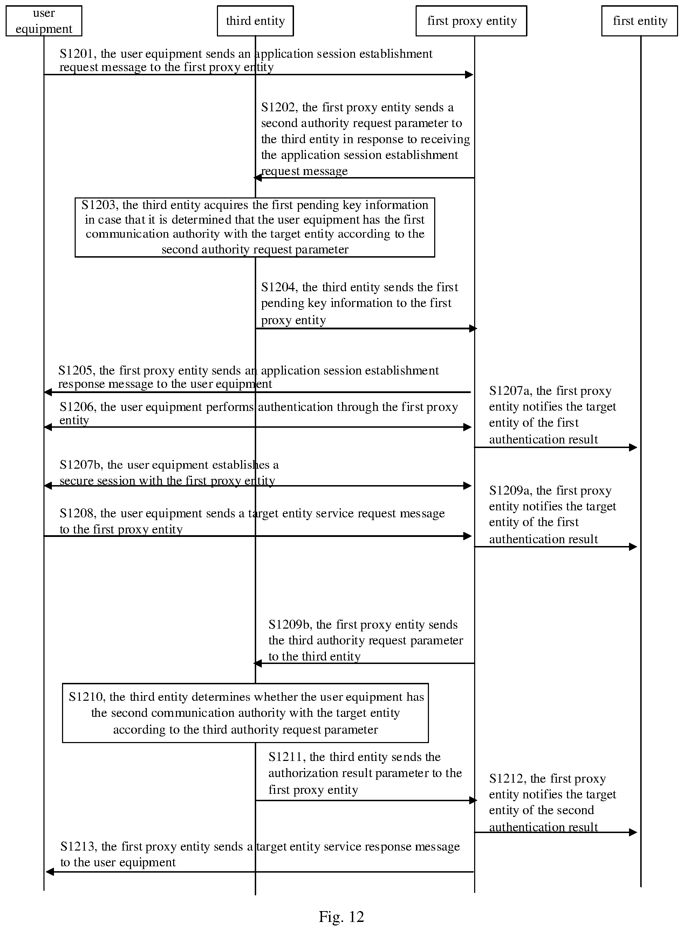

Fig. 12 shows an authentication method according to an illustrative embodiment, as shown in Fig. 12, the method may include the following operations.

In S1201, the user equipment sends an application session establishment request message to the first proxy entity.

For example, the application session establishment request message may include a first authority request parameter, and the first authority request parameter may include a key identifier A-KID of the user equipment, and a first target entity identifier, Target AF ID, of the target entity. The target entity may be an entity which is determined by the user equipment from one or more first entities and with which communication is requested.

In some embodiments, the user equipment may acquire the key identifier A-KID through a preset function entity in the communication system, and the preset function entity may include an authentication service function AUSF entity.

In S1202, the first proxy entity sends a second authority request parameter to the third entity in response to receiving the application session establishment request message.

In some embodiments, the first proxy entity may receive the application session establishment request message sent by the user equipment, and determine the second authority request parameter according to the first authority request parameter in the application session establishment request message.

For example, in a case that the first authority request parameter includes the key identifier A-KID of the user equipment, and the first target entity identifier, Target AF ID, of the target entity, it may be determined that the second authority request parameter includes the key identifier A-KID, the first target entity identifier (Target AF ID), and a proxy entity identifier of the first proxy entity.

In some embodiments, the first proxy entity may send the second authority request parameter to the third entity via a first key request message; and the first key request message is configured to instruct the third entity to acquire first pending key information and an identity of the subscriber of the user equipment. For example, the first key request message may be Naanf_AKMA_ApplicationKey_Get Request message.

In some other embodiments, the first proxy entity may send the second authority request parameter to the third entity via a second key request message; and the second key request message is configured to indicate that the first proxy entity requests to acquire the first pending key information. For example, the second key request message may be Naanf_AKMA_ApplicationKey_AnonUser_Get Request message.

In step S1203, the third entity acquires the first pending key information in a case that it is determined that the user equipment has the first communication authority with the target entity according to the second authority request parameter.

The third entity may authenticate the communication authority between the user equipment and the target entity based on a preset authority policy to determine whether the user equipment has the first communication authority with the target entity. The examples are as follows.

In some embodiments, the way for the third entity to determine whether the user equipment has the first communication authority with the target entity may include one or more of the followings.

Way 1: it is determined, according to the key identifier A-KID and the first target entity identifier, whether the user equipment has the access authority to the target entity.

Way 2: it is determined, according to the key identifier A-KID and the proxy entity identifier, whether the user equipment has the access authority to the first proxy entity.

Way 3: it is determined, according to the proxy entity identifier and the first target entity identifier, whether the first proxy entity has the proxy authority to the target entity.

Way 4: it is determined, according to the key identifier A-KID and the first target entity identifier, whether the target entity has the acquisition authority to the identity of the subscriber of the user equipment.

Way 5: it is determined, according to the key identifier A-KID, whether the user equipment is authorized to use the AKMA.

In some other embodiments, the third entity may determine that the user equipment has the first communication authority with the target entity, in a case that it is determined that the user equipment has the access authority to the target entity, and the first proxy entity has the proxy authority to the target entity. For example, the third entity may determine whether the user equipment has the first communication authority with the target entity through the following steps.

In S11, according to the proxy entity identifier and the first target entity identifier, it is determined whether the first proxy entity has the proxy authority to the target entity.

If it is determined that the first proxy entity does not have the proxy authority to the target entity, it is directly determined that the user equipment does not have the first communication authority with the target entity, and step S12 is not performed. On the contrary, if it is determined that the first proxy entity has the proxy authority to the target entity, step S12 continues to be performed.

In S12, according to the key identifier A-KID and the first target entity identifier, it is determined whether the user equipment has the access authority to the target entity.

If it is determined that the user equipment does not have the access authority to the target entity, it is directly determined that the user equipment does not have the first communication authority with the target entity, and step S13 is not performed. On the contrary, if it is determined that the user equipment has the access authority to the target entity, step S13 continues to be performed.

In S13, according to the key identifier A-KID, it is determined whether the user equipment is authorized to use the AKMA.

In a case that it is determined that the user equipment is authorized to use the AKMA, it may be determined that the user equipment has the first communication authority with the target entity. On the contrary, in a case that it is determined that the user equipment is not authorized to use the AKMA, it may be determined that the user equipment does not have the first communication authority with the target entity.

It should be noted that the first pending key information may include entity key information corresponding to the target entity.

In some embodiments, the entity key information corresponding to the target entity may include the application key K_{AF} corresponding to the target entity.

In some other embodiments, the entity key information corresponding to the target entity may include the application key K_{AF} and the key expiration time (K_{AF} expiration time) corresponding to the target entity.

In S1204, the third entity sends the first pending key information to the first proxy entity.

In some embodiments, the third entity may send the first pending key information to the first proxy entity via a first key response message. For example, the first key response message may be Naanf_AKMA _ApplicationKey_Get Responsemessage.

In some other embodiments, the third entity may send the first pending key information to the first proxy entity via a second key response message. For example, the second key response message may be Naanf_AKMA_ApplicationKey_AnonUser_Get Responsemessage

In some embodiments, the first key response message may also include a second identity of the subscriber of the user equipment, and the second identity of the subscriber may be an identifier representing the user equipment inside the 3GPP operator domain. For example, the second identity of the subscriber may be a subscription permanent identifier SUPI corresponding to the user equipment.

In S1205, the first proxy entity sends an application session establishment response message to the user equipment.

In a case that the first proxy entity acquires the application key K_{AF} in the first key response message, it may be determined that the user equipment has the first communication authority with the target entity. At this time, the first proxy entity may send the application session establishment response message to the user equipment.

In S1206, the user equipment performs authentication through the first proxy entity.

The user equipment may perform the authentication through the first proxy entity in a case that it is determined that the user equipment has the first communication authority with the target entity. For example, the user equipment can derive the entity key K_{AF} corresponding to the target entity based on the FQDN of the target entity, and perform the authentication with the first proxy entity based on the entity key K_{AF}.

In S1207a, the first proxy entity notifies the target entity of the first authentication result.

The first authentication result may be configured to indicate that the user equipment has the communication authority with the target entity.

In some embodiments, in a case that the target entity is a trusted entity providing an application function inside the 3GPP operator domain, the first proxy entity may send a first notification message to the target entity, and the first notification message may include the first authentication result. Further, in a case that the first proxy entity acquires the second identity of the subscriber of the user equipment (for example, the second identity of the subscriber is acquired via the first key response message), the first notification message may also include the second identity of the subscriber.

In some other embodiments, in a case that the target entity is an untrusted entity providing an application function outside the 3GPP operator domain, the first proxy entity may send a second notification message to the second entity according to the first authentication result to instruct the second entity to send the first authentication result to the target entity. Similarly, in a case that the first proxy entity acquires the second identity of the subscriber of the user equipment (for example, the second identity of the subscriber is acquired via the first key response message), the second notification message may also include the second identity of the subscriber.

In some embodiments, in a case that the UE authentication through the first proxy entity is successful, the first proxy entity may notify the target entity of the first authentication result (step S1207a is performed, while step S1207b and subsequent steps do not continue to be performed).

In some other embodiments, in a case that the UE authentication through the first proxy entity is successful, the first proxy entity may acquire the proxy domain name of the first proxy entity and the first domain name of the target entity. In a case that the proxy domain name is different from the first domain name, the first authentication result is notified to the target entity (step S 1207a step is performed, while step S1209b and subsequent steps do not continue to be performed), so as to indicate that the target entity has the communication authority or communicates with the user equipment.

In some other embodiments, in a case that the proxy domain name is the same as the first domain name, the first proxy entity may temporarily not send the authentication result notification message to the target entity, but waits for whether the user equipment has the second communication authority with the target entity, and notifies the target entity of the first authentication result after determining that the user equipment has the second communication authority with the target entity. That is, step S1207a is not performed, while step S 1207b and subsequent steps continue to be performed.

In S 1207b, the user equipment establishes a secure session with the first proxy entity.

The secure session may include a TLS session.

In S 1208, the user equipment sends a target entity service request message to the first proxy entity.

The target entity service request message includes a second target entity identifier, which is a protected entity identifier acquired by the user equipment according to the first target entity identifier of the target entity.

In some embodiments, the target entity service request message may include the key identifier A-KID and the second target entity identifier.

In some embodiments, in a case that the second target entity identifier is the same as the first target entity identifier, it may be determined that the user equipment has the second communication authority with the target entity, then the authentication result notification message may be sent to the target entity, and a target entity service response message may be sent to the user equipment. That is, steps S1209a and S1213 are performed, without need to perform steps S 1209b to S 1212.

In some other embodiments, in a case that the second target entity identifier is different from the first target entity identifier, the first proxy entity may determine whether the user equipment has the second communication authority with the target entity through key request message interaction with the second entity. That is, step S 1209a is not performed, and step S1209b and subsequent steps continue to be performed.

In S 1209a, the first proxy entity notifies the target entity of the first authentication result.

In S 1209b, the first proxy entity sends the third authority request parameter to the third entity.

In some embodiments, the third authority request parameter may include the key identifier A-KID, the second target entity identifier, and the proxy entity identifier corresponding to the first proxy entity; and the third authority request parameter may be configured to instruct the third entity to determine whether the user equipment has the second communication authority with the target entity.

In some embodiments, the first proxy entity may send the third authority request parameter to the third entity via a third key request message; and the third key request message is configured to instruct the third entity to acquire an authorization result parameter and the identity of the subscriber of the user equipment. For example, the third key request message may be a Naanf_AKMA_ApplicationKey_Get Request message.

In some other embodiments, the first proxy entity may send the third authority request parameters to the third entity via a fourth key request message; and the fourth key request message is configured to indicate that the first proxy entity requests to acquire the authorization result parameter. For example, the fourth key request message may be Naanf_AKMA_ApplicationKeyAnonUser_Get Request message.

In S1210, the third entity determines whether the user equipment has the second communication authority with the target entity according to the third authority request parameter.

For example, the way for the third entity to determine whether the user equipment has the second communication authority with the target entity may include one or more of the followings.

Way 6: it is determined, according to the key identifier A-KID and the second target entity identifier, whether the user equipment has the access authority to the target entity.

Way 7: it is determined, according to the proxy entity identifier and the second target entity identifier, whether the first proxy entity has the proxy authority to the target entity.

Way 8: it is determined, according to the key identifier A-KID and the first target entity identifier, whether the target entity has the acquisition authority to the identity of the subscriber of the user equipment.

In some embodiments, the third entity may determine that the user equipment has the second communication authority with the target entity, in a case that it is determined that the user equipment has the access authority to the target entity and the first proxy entity has the proxy authority to the target entity.

In S1211, the third entity sends the authorization result parameter to the first proxy entity.

The authorization result parameter may be configured to notify the first proxy entity whether the user equipment has the second communication authority with the target entity.

In some embodiments, the third entity may send the authorization result parameter to the first proxy entity via a third key response message. For example, the third key response message may be Naanf_AKMA _ApplicationKey_Get Response message.

In some other embodiments, the third entity may send the authorization result parameter to the first proxy entity via a fourth key response message. For example, the fourth key response message may be Naanf_AKMA_ApplicationKey_AnonUser_Get Response message.

In some embodiments, in a case that the third entity determines that the target entity has the authority to acquire the identity of the subscriber, the third key response message may also include the second identity of the subscriber of the user equipment. Similarly, the fourth key response message may also include the second identity of the subscriber of the user equipment. The second identity of the subscriber may be a subscription permanent identifier SUPI corresponding to the user equipment.

In S1212, the first proxy entity notifies the target entity of the second authentication result.

The second authentication result may be configured to indicate that the target entity has communication authority with the user equipment.

For example, in a case that the target entity is a trusted entity providing an application function inside the 3GPP operator domain, the first proxy entity may send a third notification message to the target entity, and the third notification message includes the second authentication result. Further, in a case that the first proxy entity acquires the second identity of the subscriber of the user equipment (for example, the second identity of the subscriber is acquired via the third key response message), the third notification message may also include the second identity of the subscriber.

For another example, in a case that the target entity is an untrusted entity providing an application function outside the 3GPP operator domain, the first proxy entity may send a fourth notification message to the second entity according to the first authentication result to instruct the second entity to send the first authentication result to the target entity. Further, in a case that the first proxy entity acquires the second identity of the subscriber of the user equipment (for example, the second identity of the subscriber is acquired via the third key response message), the fourth notification message may also include the second identity of the subscriber.

In some embodiments, the second identity of the subscriber may be a subscription permanent identifier SUPI corresponding to the user equipment.

In step S1213, the first proxy entity sends a target entity service response message to the user equipment.

The target entity service response message is configured to indicate whether the user equipment has the second communication authority with the target entity.

In some embodiments, the first proxy entity may include a trusted authentication proxy AP entity inside the 3GPP operator domain.

In some embodiments, the first entity may include: a trusted application function AF entity inside the 3GPP operator domain, a trusted service capability server SCS/application server AS entity inside the 3GPP operator domain, an untrusted application function AF entity outside the 3GPP operator domain, or an untrusted service capability server SCS/application server AS entity outside the 3GPP operator domain.

In some embodiments, the second entity may include: a network exposure function NEF entity or a service capability exposure function SCEF entity.

In some embodiments, the third entity may include: an AKMA anchor function AAnF entity.

In this way, for the first entity, whether the user equipment has the communication authority with the first entity is determined by the trusted first proxy entity inside the 3GPP operator domain, and the UE authentication is performed in a case that the user equipment has the first communication authority, so that part of functions of the first entity can be realized through the first proxy entity, thereby reducing the load of the first entity and improving the efficiency of the first entity. Moreover, the user equipment realizes the authorization and authentication with one or more first entities through the unified first proxy entity, which also reduces the complexity of UE authentication and improves the efficiency of the user equipment.

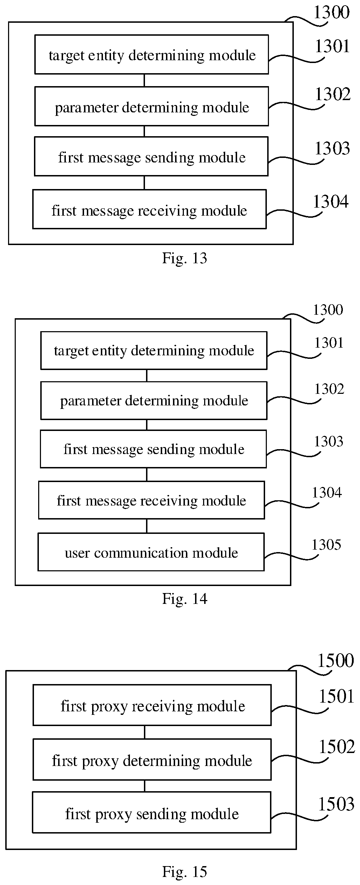

Fig. 13 is a block diagram of an authentication apparatus 1300 according to an illustrative embodiment, which may be applied to the user equipment. As shown in Fig. 13, the apparatus 1300 may include:
a target entity determining module 1301 configured to determine, from one or more first entities, a target entity with which communication is requested;
a parameter determining module 1302 configured to determine a first authority request parameter according to the target entity;
a first message sending module 1303 configured to send an application session establishment request message to a first proxy entity according to the first authority request parameter; where the application session establishment request message is configured to instruct the first proxy entity to determine whether the user equipment has a first communication authority with the target entity according to the first authority request parameter; the first entity includes an entity providing an application function, the first proxy entity includes a trusted entity providing an authentication function inside a 3GPP operator domain, and the first proxy entity provides an authentication proxy function for the first entity;
a first message receiving module 1304 configured to determine whether the user equipment has the first communication authority with the target entity in response to receiving an application session establishment response message sent by the first proxy entity; and
an authentication module configured to perform authentication through the first proxy entity in a case that the user equipment has the first communication authority with the target entity.

Optionally, the parameter determining module 1302 is configured to take a first target entity identifier of the target entity and a key identifier A-KID corresponding to the user equipment as the first authority request parameter.

Optionally, the first communication authority includes one or more of:
the user equipment having an access authority to the target entity;
the user equipment having an access authority to the first proxy entity;
the first proxy entity having a proxy authority to the target entity; or
the target entity having an acquisition authority to an identity of the subscriber of the user equipment.

Fig. 14 is a block diagram of an authentication apparatus 1300 according to an illustrative embodiment, which may be applied to the user equipment, as shown in Fig. 14, the apparatus 1300 may further include: a user communication module 1305 configured, after the authentication through the first proxy entity is successful, to: establish a secure session with the first proxy entity; acquire a proxy domain name of the first proxy entity and a first domain name of the target entity; determine whether the user equipment has a second communication authority with the target entity through the secure session in a case that the proxy domain name is the same as the first domain name; and communicate with the target entity in a case that it is determined that the user equipment has the second communication authority with the target entity.

Optionally, the user communication module 1305 is configured to: send a target entity service request message to the first proxy entity through the secure session; and determine whether the user equipment has the second communication authority with the target entity in response to receiving a target entity service response message sent by the first proxy entity. The target entity service request message includes a second target entity identifier, the second target entity identifier is a protected entity identifier acquired by the user equipment according to the first target entity identifier, and the target entity service request message is configured to instruct the first proxy entity to determine whether the user equipment has the second communication authority with the target entity according to the second target entity identifier.

Optionally, the second communication authority includes one or more of: the user equipment having an access authority to the target entity; the first proxy entity having a proxy authority to the target entity; or the target entity having an acquisition authority to an identity of the subscriber of the user equipment.

Optionally, the first message receiving module 1304 is configured to: determine that the user equipment has the first communication authority with the target entity in a case that the application session establishment response message is received; or determine that the user equipment has the first communication authority with the target entity, in a case that the application session establishment response message is received and the session establishment response message includes success indication information.

Optionally, the first proxy entity includes a trusted authentication proxy AP entity inside the 3GPP operator domain.

Optionally, the first entity includes a trusted entity providing an application function inside the 3GPP operator domain.

Optionally, the first entity includes: a trusted application function AF entity inside the 3GPP operator domain, or a trusted service capability server SCS/application server AS entity inside the 3GPP operator domain.

Optionally, the first entity includes an untrusted entity providing an application function outside the 3GPP operator domain, the first proxy entity communicates with the first entity through a second entity; and the second entity includes an entity providing a network exposure function.

Optionally, the first entity includes: an untrusted application function AF entity outside the 3GPP operator domain, or an untrusted service capability server SCS/application server AS outside the 3GPP operator domain.

Optionally, the second entity includes: a network exposure function NEF entity or a service capability exposure function SCEF entity.

Fig. 15 is a block diagram of an authentication apparatus 1500 according to an illustrative embodiment, which may be applied to a first proxy entity. As shown in Fig. 15, the apparatus 1500 may include:
a first proxy receiving module 1501 configured to receive an application session establishment request message sent by a user equipment; where the application session establishment request message includes a first authority request parameter, the application session establishment request message is configured to instruct the first proxy entity to determine whether the user equipment has a first communication authority with a target entity according to the first authority request parameter, the target entity is an entity which is determined by the user equipment from one or more first entities and with which communication is requested, the first entity includes an entity providing an application function, the first proxy entity includes a trusted entity providing an authentication function inside a 3GPP operator domain, and the first proxy entity provides an authentication proxy function for the first entity;
a first proxy determining module 1502 configured to determine whether the user equipment has the first communication authority with the target entity according to the first authority request parameter; and
a first proxy sending module 1503 configured to send an application session establishment response message to the user equipment, and perform UE authentication, in a case that the user equipment has the first communication authority with the target entity

Optionally, the first authority request parameter includes a first target entity identifier of the target entity and a key identifier A-KID corresponding to the user equipment.

Optionally, the first communication authority includes one or more of:
the user equipment having an access authority to the target entity;
the user equipment having an access authority to the first proxy entity;
the first proxy entity having a proxy authority to the target entity; or
the target entity having an acquisition authority to an identity of the subscriber of the user equipment.

Optionally, the first proxy determining module 1502 is configured to: determine a second authority request parameter according to the first authority request parameter; send the second authority request parameter to a third entity, where the third entity includes an entity that provides AKMA authorization and application key derivation functions, and the second authority request parameter is configured to instruct the third entity to determine whether the user equipment has the first communication authority with the target entity; acquire first pending key information sent by the third entity, where the first pending key information is key information acquired by the third entity according to the second authority request parameter; and determine whether the user equipment has the first communication authority with the target entity according to the first pending key information.

Optionally, the first proxy determining module 1502 is configured to: take the first authority request parameter and a proxy entity identifier corresponding to the first proxy entity as the second authority request parameter.

Optionally, the first proxy determining module 1502 is configured to: send the second authority request parameter to the third entity via a first key request message, where the first key request message is configured to instruct the third entity to acquire the first pending key information and an identity of the subscriber of the user equipment; receive a first key response message sent by the third entity; and acquire the first pending key information included in the first key response message.

Optionally, the first key response message further includes a second identity of the subscriber corresponding to the user equipment, and the first proxy determining module 1502 is configured to acquire the second identity of the subscriber according to the first key response message received.

Optionally, the second identity of the subscriber includes a subscription permanent identifier SUPI corresponding to the user equipment.

Optionally, the first proxy determining module 1502 is configured to: send the second authority request parameter to the third entity via a second key request message, where the second key request message is configured to indicate that the first proxy entity requests to acquire the first pending key information; receive a second key response message sent by the third entity; and acquire the first pending key information included in the second key response message.

Optionally, the first proxy determining module 1502 is configured to: determine that the user equipment has the first communication authority with the target entity in a case that the first pending key information includes entity key information corresponding to the target entity.

Optionally, in a case that the UE authentication is successful, the first proxy sending module 1503 is configured to: notify the target entity of a first authentication result of the authentication.

Optionally, the first proxy sending module 1503 is configured to: acquire a proxy domain name of the first proxy entity and a first domain name of the target entity; and notify the target entity of the first authentication result in a case that the proxy domain name is different from the first domain name.

Optionally, in a case that the target entity is a trusted entity providing an application function inside the 3GPP operator domain, the first proxy sending module 1503 is configured to: send a first notification message to the target entity. The first notification message includes the first authentication result.

Optionally, in a case that the first proxy entity acquires a second identity of the subscriber of the user equipment, the first notification message further includes the second identity of the subscriber.

Optionally, in a case that the target entity is an untrusted entity providing an application function outside the 3GPP operator domain, the first proxy sending module 1503 is configured to: send a second notification message to a second entity according to the first authentication result to instruct the second entity to send the first authentication result to the target entity.

Optionally, in a case that the first proxy entity acquires a second identity of the subscriber of the user equipment, the second notification message further includes the second identity of the subscriber.

Optionally, after the UE authentication is successful, the apparatus further includes:

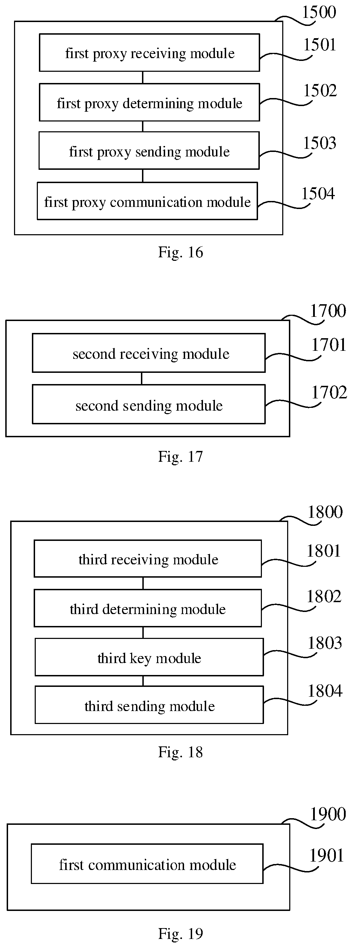

Fig. 16 is a block diagram of an authentication apparatus 1500 according to an illustrative embodiment, as shown in Fig. 16, the apparatus may further include: a first proxy communication module 1504 configured to: establish a secure session with the user equipment; receive, through the secure session, a target entity service request message sent by the user equipment, where the target entity service request message includes a second target entity identifier, the second target entity identifier is a protected entity identifier acquired by the user equipment according to a first target entity identifier of the target entity, and the target entity service request message is a message sent by the user equipment in a case that it is determined that a proxy domain name of the first proxy entity is the same as a first domain name of the target entity; determine whether the user equipment has a second communication authority with the target entity according to the second target entity identifier; and send a target entity service response message to the user equipment, where the target entity service response message is configured to indicate whether the user equipment has the second communication authority with the target entity.

Optionally, the second communication authority includes one or more of:
the user equipment having an access authority to the target entity;
the first proxy entity having a proxy authority to the target entity; or
the target entity having an acquisition authority to an identity of the subscriber of the user equipment.

Optionally, the first proxy communication module 1504 is configured to: determine that the user equipment has the second communication authority with the target entity in a case that the second target entity identifier is the same as the first target entity identifier.

Optionally, the first proxy communication module 1504 is configured to: determine a third authority request parameter according to the second target entity identifier in a case that the second target entity identifier is different from the first target entity identifier; send the third authority request parameter to a third entity, where the third authority request parameter is configured to instruct the third entity to determine whether the user equipment has the second communication authority with the target entity; acquire an authorization result parameter sent by the third entity, where the authorization result parameter is configured to indicate whether the user equipment has the second communication authority with the target entity; and determine whether the user equipment has the second communication authority with the target entity according to the authorization result parameter.

Optionally, the first proxy communication module 1504 is configured to: take the second target entity identifier, a key identifier A-KID corresponding to the user equipment, and a proxy entity identifier corresponding to the first proxy entity as the third authority request parameter.

Optionally, the first proxy communication module 1504 is configured to: send the third authority request parameter to the third entity via a third key request message, where the third key request message is configured to instruct the third entity to acquire the authorization result parameter and an identity of the subscriber of the user equipment; receive a third key response message sent by the third entity; and acquire the authorization result parameter included in the third key response message.

Optionally, the third key response message further includes a second identity of the subscriber corresponding to the user equipment, and the first proxy communication module 1504 is configured to: acquire the second identity of the subscriber according to the third key response message received.

Optionally, the third key request message further includes an authorization indication parameter, and the authorization indication parameter is configured to instruct the third entity to determine whether the user equipment has the second communication authority with the target entity according to the third key request message.

Optionally, the first proxy communication module 1504 is configured to: send the third authority request parameter to the third entity via a fourth key request message, where the fourth key request message is configured to indicate that the first proxy entity requests to acquire the authorization result parameter; receive a fourth key response message sent by the third entity; and acquire the authorization result parameter included in the fourth key response message.

Optionally, the fourth key request message further includes an authorization indication parameter, the authorization indication parameter is configured to instruct the third entity to determine whether the user equipment has the second communication authority with the target entity according to the fourth key request message.

Optionally, the first proxy communication module 1504 is configured to: notify the target entity of a second authentication result in a case that it is determined according to an authorization result parameter that the user equipment has the second communication authority with the target entity. The second authentication result is configured to indicate that the target entity has a communication authority with the target entity.

Optionally, the first proxy communication module 1504 is configured to: send a third notification message to the target entity, in a case that the target entity is a trusted entity providing an application function inside the 3GPP operator domain. The third notification message includes the second authentication result.

Optionally, in a case that the first proxy entity acquires a second identity of the subscriber of the user equipment, the third notification message further includes the second identity of the subscriber.

Optionally, the first proxy communication module 1504 is configured to: send a fourth notification message to a second entity according to a first authentication result to instruct the second entity to send the first authentication result to the target entity, in a case that the target entity is an untrusted entity providing an application function outside the 3GPP operator domain.

Optionally, in a case that the first proxy entity acquires a second identity of the subscriber of the user equipment, the fourth notification message further includes the second identity of the subscriber.

Optionally, the first pending key information includes an application key K_{AF} and a key expiration time.

Optionally, the second entity includes a network exposure function NEF entity or a service capability exposure function SCEF entity.

Optionally, the first proxy entity includes a trusted authentication proxy AP entity inside the 3GPP operator domain.

Optionally, the first entity includes: a trusted application function AF entity inside the 3GPP operator domain, a trusted service capability server SCS/application server AS entity inside the 3GPP operator domain, an untrusted application function AF entity outside the 3GPP operator domain, or an untrusted service capability server SCS/application server AS entity outside the 3GPP operator domain.

Fig. 17 is a block diagram of an authentication apparatus 1700 according to an illustrative embodiment, which may be applied to a second entity. As shown in Fig. 17, the apparatus 1700 may include:
a second receiving module 1701, configured to acquire an authentication result of a first proxy entity to a user equipment, where the authentication result includes a first authentication result or a second authentication result, the first authentication result is configured to indicate that the user equipment has a first communication authority with a target entity; the second authentication result is configured to indicate that the user equipment has a second communication authority with the target entity; the target entity is an entity which is determined by the user equipment from one or more first entities and with which communication is requested, the first entity includes an untrusted entity providing an application function outside a 3GPP operator domain, the first proxy entity includes a trusted entity providing an authentication function inside the 3GPP operator domain, and the first proxy entity provides an authentication proxy function for the first entity; and
a second sending module 1702, configured to send the authentication result to the target entity to make the target entity communicate with the user equipment according to the authentication result.

Optionally, the second receiving module 1701 is configured to: receive a second notification message sent by the first proxy entity, where the second notification message is a message sent by the first proxy entity to the second entity according to the first authentication result in a case that the target entity is an untrusted entity providing an application function outside the 3GPP operator domain; and acquire the first authentication result according to the second notification message. The second sending module 1702 is configured to: send a fifth notification message to the target entity according to the first authentication result.

Optionally, in a case that the second notification message includes a second identity of the subscriber corresponding to the user equipment, the second sending module 1702 is configured to: acquire a first identity of the subscriber corresponding to the user equipment according to the second identity of the subscriber; and send the fifth notification message to the target entity according to the first authentication result and the first identity of the subscriber.

Optionally, the first identity of the subscriber is a generic public subscription identifier GPSI corresponding to the user equipment; and the second identity of the subscriber includes a subscription permanent identifier SUPI corresponding to the user equipment.

Optionally, the second receiving module 1701 is configured to: receive a fourth notification message sent by the first proxy entity, where the fourth notification message is a message sent by the first proxy entity to the second entity according to the second authentication result in a case that the target entity is an untrusted entity providing an application function outside the 3GPP operator domain; and acquire the second authentication result according to the second notification message. The second sending module 1702 is configured to: send a sixth notification message to the target entity according to the second authentication result.

Optionally, in a case that the fourth notification message includes a second identity of the subscriber corresponding to the user equipment, the second sending module 1702 is configured to: acquire a first identity of the subscriber corresponding to the user equipment according to the second identity of the subscriber; and send the sixth notification message to the target entity according to the second authentication result and the first identity of the subscriber.

Optionally, the second entity includes: a network exposure function NEF entity or a service capability exposure function SCEF entity.

Fig. 18 is a block diagram of an authentication apparatus 1800 according to an illustrative embodiment, which may be applied to a third entity. As shown in Fig. 18, the apparatus 1800 may include:
a third receiving module 1801 configured to receive a second authority request parameter sent by a first proxy entity, where the second authority request parameter is configured to instruct the third entity to determine whether a user equipment has a first communication authority with a target entity, the target entity is an entity which is determined by the user equipment from one or more first entities and with which communication is requested, the first entity includes an entity providing an application function, the first proxy entity includes a trusted entity providing an authentication function inside a 3GPP operator domain, the first proxy entity provides an authentication proxy function for the first entity, and the third entity includes an entity that provides AKMA authorization and application key derivation functions;
a third determining module 1802 configured to determine whether the user equipment has the first communication authority with the target entity according to the second authority request parameter;
a third key module 1803 configured to acquire first pending key information in a case that the user equipment has the first communication authority with the target entity; and
a third sending module 1804 configured to send the first pending key information to the first proxy entity.

Optionally, the second authority request parameter includes a key identifier A-KID corresponding to the user equipment, a first target entity identifier of the target entity and a proxy entity identifier corresponding to the first proxy entity; and the third determining module 1802 is configured to determine whether the user equipment has the first communication authority with the target entity by one or more of: determining whether the user equipment has an access authority to the target entity according to the key identifier A-KID and the first target entity identifier; determining whether the user equipment has an access authority to the first proxy entity according to the key identifier A-KID and the proxy entity identifier; or determining whether the first proxy entity has a proxy authority to the target entity according to the proxy entity identity and the first target entity identity.

Optionally, the third key module 1803 is configured to acquire the first pending key information according to entity key information corresponding to the target entity.

Optionally, the third receiving module 1801 is configured to: receive the second authority request parameter sent by the first proxy entity via a first key request message; and the first key request message is configured to instruct the third entity to acquire the first pending key information and an identity of the subscriber of the user equipment. The third sending module 1804 is configured to send the first pending key information to the first proxy entity via a first key response message.

Optionally, the third sending module 1804 is configured to send the first pending key information and a second identity of the subscriber corresponding to the user equipment to the first proxy entity via the first key response message in a case that it is determined that the target entity has an acquisition authority to the identity of the subscriber.

Optionally, the second identity of the subscriber is a subscription permanent identifier SUPI corresponding to the user equipment.

Optionally, the third receiving module 1801 is configured to: receive the second authority request parameter sent by the first proxy entity via a second key request message; and the second key request message is configured to instruct the third entity to acquire the first pending key information. The third sending module 1804 is configured to: send the first pending key information to the first proxy entity via a second key response message.

Optionally, the third determining module 1802 is configured, after sending the first pending key information to the first proxy entity, to: receive a third authority request parameter sent by the first proxy entity; determine whether the user equipment has a second communication authority with the target entity according to the third authority request parameter; and send an authorization result parameter to the first proxy entity. The authorization result parameter is configured to notify the first proxy entity whether the user equipment has the second communication authority with the target entity.

Optionally, the third authority request parameter includes a key identifier A-KID, a second target entity identifier, and a proxy entity identifier corresponding to the first proxy entity, and the second target entity identifier is a protected entity identifier acquired by the user equipment according to a first target entity identifier of the target entity. The third determining module 1802 is configured to determine whether the user equipment has the second communication authority with the target entity by one or more of: determining whether the user equipment has an access authority to the target entity according to the key identifier A-KID and the second target entity identifier; or determining whether the first proxy entity has a proxy authority to the target entity according to the proxy entity identifier and the second target entity identifier.

Optionally, the third determining module 1802 is configured to: receive the third authority request parameter sent by the first proxy entity via a third key request message, where the third key request message is configured to instruct the third entity to acquire an authorization result parameter and an identity of the subscriber of the user equipment; and send the authorization result parameter to the first proxy entity via a third key response message.

Optionally, the third key request message further includes an authorization indication parameter, and the authorization indication parameter is configured to instruct the third entity to determine whether the user equipment has the second communication authority with the target entity according to the third key request message.

Optionally, the third determining module 1802 is configured to: send the authorization result parameter and a second identity of the subscriber corresponding to the user equipment to the first proxy entity via the third key response message in a case that it is determined that the target entity has an acquisition authority to the identity of the subscriber.

Optionally, the second identity of the subscriber is a subscription permanent identifier SUPI corresponding to the user equipment.

Optionally, the third determining module 1802 is configured to: receive the third authority request parameter sent by the first proxy entity via a fourth key request message, where the fourth key request message is configured to instruct the third entity to acquire the authorization result parameter; and send the authorization result parameter to the first proxy entity via a fourth key response message.

Optionally, the third determining module 1802 is configured to: determine whether the third entity has an authority to serve the first proxy entity according to a first preset policy; and determine whether the user equipment has the second communication authority with the target entity according to the third authority request parameter in a case that the third entity has the authority to serve the first proxy entity.

Optionally, the third determining module 1802 is configured to: determine whether the third entity has an authority to serve the first proxy entity according to a first preset policy; and determine whether the user equipment has the first communication authority with the target entity according to the second authority request parameter in a case that the third entity has the authority to serve the first proxy entity.

Optionally, the first proxy entity includes a trusted authentication proxy AP entity inside the 3GPP operator domain; and the third entity includes: an AKMA anchor function AAnF entity.

Optionally, the first entity includes: a trusted application function AF entity inside the 3GPP operator domain, a trusted service capability server SCS/application server AS entity inside the 3GPP operator domain, an untrusted application function AF entity outside the 3GPP operator domain, or an untrusted service capability server SCS/application server AS entity outside the 3GPP operator domain.

Fig. 19 is a block diagram of an authentication apparatus 1900 according to an illustrative embodiment, which may be applied to a first entity. As shown in Fig. 19, the apparatus 1900 may further include: a first communication module 1901 configured to: acquire an authentication result of a first proxy entity to a user equipment; and communicate with the user equipment according to the authentication result. The authentication result includes a first authentication result or a second authentication result, the first authentication result is configured to indicate that the user equipment has a first communication authority with the target entity; the second authentication result is configured to indicate that the user equipment has a second communication authority with the target entity; the first entity includes an entity providing an application function, the target entity is an entity which is determined by the user equipment from one or more first entities and with which communication is requested, the first proxy entity includes a trusted entity providing an authentication function inside a 3GPP operator domain, and the first proxy entity provides an authentication proxy function for the first entity

Optionally, the first communication module 1901 is configured to: receive a first notification message sent by the first proxy entity, where the first notification message includes the first authentication result; or receive a third notification message sent by the first proxy entity, where the third notification message includes the second authentication result, in a case that the target entity is a trusted entity providing the application function inside the 3GPP operator domain.

Optionally, the first notification message or the third notification message further includes a second identity of the subscriber corresponding to the user equipment.

Optionally, the second identity of the subscriber includes a subscription permanent identifier SUPI corresponding to the user equipment.

Optionally, the first communication module 1901 is configured to: receive a fifth notification message sent by a second entity, where the fifth notification message includes the first authentication result, and the fifth notification message is a message sent by the second entity in response to receiving a second notification message; or receive a sixth notification message sent by the second entity, where the sixth notification message includes the second authentication result, and the fifth notification message is a message sent by the second entity in response to receiving a fourth notification message, in a case that the target entity is an untrusted entity providing the application function outside the 3GPP operator domain.

Optionally, the fifth notification message or the sixth notification message further includes a first identity of the subscriber of the user equipment.

Optionally, the first identity of the subscriber is a generic public subscription identifier GPSI corresponding to the user equipment.

Optionally, the first proxy entity includes a trusted authentication proxy AP entity inside the 3GPP operator domain.

Optionally, the first entity includes: a trusted application function AF entity inside the 3GPP operator domain, a trusted service capability server SCS/application server AS entity inside the 3GPP operator domain, an untrusted application function AF entity outside the 3GPP operator domain, or an untrusted service capability server SCS/application server AS entity outside the 3GPP operator domain.

With regard to the apparatuses in the above embodiments, the specific way in which each module performs operations has been described in detail in the embodiments of the methods, and will not be described in detail here.

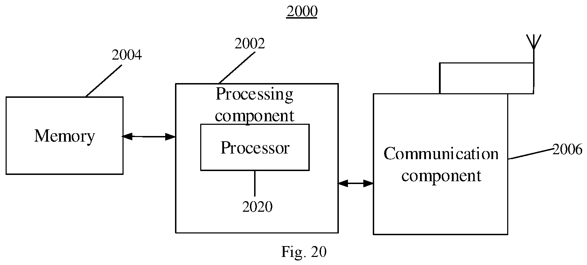

Fig. 20 is a block diagram of an authentication apparatus according to an illustrative embodiment. For example, the authentication apparatus 2000 may be a terminal device, such as a mobile phone, a computer, a digital broadcasting terminal, a messaging device, a game console, a tablet device, a medical device, a fitness device, a personal digital assistant, etc. The authentication apparatus 2000 may also be a server, such as a local server or a cloud server. The authentication apparatus 2000 may also be the user equipment shown in Fig. 1, and the authentication apparatus 2000 may also be any network entity in the communication system shown in Fig. 1, such as the first entity, the first proxy entity, the second entity or the third entity.

Referring to Fig. 20, the apparatus 2000 may include one or more of the following components: a processing component 2002, a memory 2004, and a communication component 2006.

The processing component 2002 generally controls the overall operation of the apparatus 2000, such as operations associated with display, telephone call, data communication, camera operation and recording operation. The processing component 2002 may include one or more processors 2020 to execute instructions so as to complete all or part of the steps of the authentication methods described above. In addition, the processing component 2002 may include one or more modules to facilitate the interaction between the processing component 2002 and other components. For example, the processing component 2002 may include a multimedia module to facilitate the interaction between the multimedia component and the processing component 2002.

The memory 2004 is configured to store various types of data to support operations in the apparatus 2000. Examples of these data include instructions for any application or method operating on the apparatus 2000, contact data, phone book data, messages, pictures, videos, and the like. The memory 2004 may be realized by any type of volatile or nonvolatile memory device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The communication component 2006 is configured to facilitate wired or wireless communication between the apparatus 2000 and other devices. The apparatus 2000 can access a wireless network based on communication standards, such as WiFi, 2G or 3G, or a combination thereof. In an illustrative embodiment, the communication component 2006 receives a broadcast signal or broadcast related information from an external broadcast management system via a broadcast channel. In an illustrative embodiment, the communication component 2006 further includes a near field communication (NFC) module to facilitate short-range communication. For example, the NFC module can be implemented based on the radio frequency identification (RFID) technology, the infrared data association (IrDA) technology, the ultra-wideband (UWB) technology, the Bluetooth (BT) technology and other technologies.

In an illustrative embodiment, the apparatus 2000 may be implemented by one or more application-specific integrated circuits (ASIC), digital signal processors (DSP), digital signal processing devices (DSPD), programmable logic devices (PLD), field programmable gate arrays (FPGA), controllers, microcontrollers, microprocessors or other electronic components, for performing the above authentication methods.

Besides as an independent electronic device, the apparatus 2000 may also be a part of an independent electronic device. For example, in an embodiment, the electronic device may be an Integrated Circuit (IC) or a chip, where the integrated circuit may be one IC or a collection of a plurality of ICs. The chip may include, but is not limited to, the following types: a Graphics Processing Unit (GPU), Central Processing Unit (CPU), a Field Programmable Gate Array (FPGA), a Digital Signal Processor (DSP), an Application Specific Integrated Circuit (ASIC), a System on Chip (SOC), etc. The integrated circuit or chip may be used to execute executable instructions (or codes) to realize the authentication methods. The executable instructions may be stored in the integrated circuit or chip, and may also be acquired from other devices or apparatuses. For example, the integrated circuit or chip includes a processor, a memory, and an interface for communicating with other devices. The executable instruction may be stored in the processor, and when the executable instructions are executed by the processor, the above authentication methods are realized. Alternatively, the integrated circuit or chip can receive the executable instructions through the interface and transmit them to the processor for execution, so as to realize the above authentication methods.

In an illustrative embodiment, there is also provided a non-transitory computer-readable storage medium including instructions, such as the memory 2004 including instructions, and the instructions may be executed by the processor 2020 of the apparatus 2000 to complete the above authentication methods. For example, the non-transitory computer-readable storage medium can be a ROM, a random access memory (RAM), a CD-ROM, a magnetic tape, a floppy disk, an optical data storage device, etc.

In another illustrative embodiment, there is also provided a computer program product including a computer program executable by a programmable device, and the computer program has code portions for executing the above authentication methods when executed by the programmable device.

Other embodiments of the present invention will easily occur to those skilled in the art after considering the specification and practicing the present invention. The present invention is intended to cover any variations, uses or adaptations of the present invention, which follow the general principles of the present invention and include common sense or common technical means in the related art that are not disclosed in the present invention. The specification and embodiments are to be regarded as illustrative only, with the true scope and spirit of the present invention being indicated by the following claims.

It should be understood that the present invention is not limited to the precise structure described above and shown in the drawings, and various modifications and changes can be made without departing from the scope of the present invention. The scope of the present invention is limited only by the appended claims.

## Claims

**1.** An authentication method, applied to a user equipment, comprising:
determining, from one or more first entities, a target entity with which communication is requested;
determining a first authority request parameter according to the target entity;
sending an application session establishment request message to a first proxy entity according to the first authority request parameter; wherein the application session establishment request message is configured to instruct the first proxy entity to determine whether the user equipment has a first communication authority with the target entity according to the first authority request parameter; the first entity comprises an entity providing an application function, the first proxy entity comprises a trusted entity providing an authentication function inside a 3GPP operator domain, and the first proxy entity provides an authentication proxy function for the first entity;
determining whether the user equipment has the first communication authority with the target entity in response to receiving an application session establishment response message sent by the first proxy entity; and
in a case that the user equipment has the first communication authority with the target entity, performing authentication through the first proxy entity.

**2.** The method according to claim 1, wherein determining the first authority request parameter according to the target entity comprises:
taking a first target entity identifier of the target entity and a key identifier A-KID corresponding to the user equipment as the first authority request parameter.

**3.** The method according to claim 1, wherein the first communication authority comprises one or more of:
the user equipment having an access authority to the target entity;
the user equipment having an access authority to the first proxy entity;
the first proxy entity having a proxy authority to the target entity; or
the target entity having an acquisition authority to an identity of the subscriber of the user equipment.

**4.** The method according to claim 1, wherein after the authentication through the first proxy entity is successful, the method further comprises:
establishing a secure session with the first proxy entity;
acquiring a proxy domain name of the first proxy entity and a first domain name of the target entity;
determining whether the user equipment has a second communication authority with the target entity through the secure session in a case that the proxy domain name is the same as the first domain name; and
communicating with the target entity in a case that it is determined that the user equipment has the second communication authority with the target entity.

**5.** The method according to claim 4, wherein determining whether the user equipment has the second communication authority with the target entity through the secure session comprises:
sending a target entity service request message to the first proxy entity through the secure session; wherein the target entity service request message comprises a second target entity identifier, the second target entity identifier is a protected entity identifier acquired by the user equipment according to the first target entity identifier, and the target entity service request message is configured to instruct the first proxy entity to determine whether the user equipment has the second communication authority with the target entity according to the second target entity identifier; and
determining whether the user equipment has the second communication authority with the target entity in response to receiving a target entity service response message sent by the first proxy entity.

**6.** The method according to claim 4, wherein the second communication authority comprises one or more of:
the user equipment having an access authority to the target entity;
the first proxy entity having a proxy authority to the target entity; or
the target entity having an acquisition authority to an identity of the subscriber of the user equipment.

**7.** The method according to claim 1, wherein determining whether the user equipment has the first communication authority with the target entity in response to receiving the application session establishment response message sent by the first proxy entity comprises:
determining that the user equipment has the first communication authority with the target entity in a case that the application session establishment response message is received; or
determining that the user equipment has the first communication authority with the target entity, in a case that the application session establishment response message is received and the session establishment response message comprises success indication information.

**8.** The method according to any one of claims 1 to 7, wherein the first proxy entity comprises a trusted authentication proxy AP entity inside the 3GPP operator domain.

**9.** The method according to claim 8, wherein the first entity comprises a trusted entity providing an application function inside the 3GPP operator domain.

**10.** The method according to claim 9, wherein the first entity comprises: a trusted application function AF entity inside the 3GPP operator domain, or a trusted service capability server SCS/application server AS entity inside the 3GPP operator domain.

**11.** The method according to claim 8, wherein the first entity comprises an untrusted entity providing an application function outside the 3GPP operator domain, the first proxy entity communicates with the first entity through a second entity; and the second entity comprises an entity providing a network exposure function.

**12.** The method according to claim 11, wherein the first entity comprises: an untrusted application function AF entity outside the 3GPP operator domain, or an untrusted service capability server SCS/application server AS outside the 3GPP operator domain.

**13.** The method according to claim 11, wherein the second entity comprises: a network exposure function NEF entity or a service capability exposure function SCEF entity.

**14.** An authentication method, applied to a first proxy entity, comprising:
receiving an application session establishment request message sent by a user equipment; wherein the application session establishment request message comprises a first authority request parameter, the application session establishment request message is configured to instruct the first proxy entity to determine whether the user equipment has a first communication authority with a target entity according to the first authority request parameter, the target entity is an entity which is determined by the user equipment from one or more first entities and with which communication is requested, the first entity comprises an entity providing an application function, the first proxy entity comprises a trusted entity providing an authentication function inside a 3GPP operator domain, and the first proxy entity provides an authentication proxy function for the first entity;
determining whether the user equipment has the first communication authority with the target entity according to the first authority request parameter; and
in a case that the user equipment has the first communication authority with the target entity, sending an application session establishment response message to the user equipment, and performing UE authentication.

**15.** The method according to claim 14, wherein the first authority request parameter comprises a first target entity identifier of the target entity and a key identifier **A-KID** corresponding to the user equipment.

**16.** The method according to claim 14, wherein the first communication authority comprises one or more of:
the user equipment having an access authority to the target entity;
the user equipment having an access authority to the first proxy entity;
the first proxy entity having a proxy authority to the target entity; or
the target entity having an acquisition authority to an identity of the subscriber of the user equipment.

**17.** The method according to claim 14, wherein determining whether the user equipment has the first communication authority with the target entity according to the first authority request parameter comprises:
determining a second authority request parameter according to the first authority request parameter;
sending the second authority request parameter to a third entity; wherein the third entity comprises an entity that provides AKMA authorization and application key derivation functions; and the second authority request parameter is configured to instruct the third entity to determine whether the user equipment has the first communication authority with the target entity;
acquiring first pending key information sent by the third entity, wherein the first pending key information is key information acquired by the third entity according to the second authority request parameter; and
determining whether the user equipment has the first communication authority with the target entity according to the first pending key information.

**18.** The method according to claim 17, wherein determining the second authority request parameter according to the first authority request parameter comprises:
taking the first authority request parameter and a proxy entity identifier corresponding to the first proxy entity as the second authority request parameter.

**19.** The method according to claim 17, wherein sending the second authority request parameter to the third entity comprises:
sending the second authority request parameter to the third entity via a first key request message; wherein the first key request message is configured to instruct the third entity to acquire the first pending key information and an identity of the subscriber of the user equipment;
wherein acquiring the first pending key information sent by the third entity comprises:
receiving a first key response message sent by the third entity; and
acquiring the first pending key information comprised in the first key response message.

**20.** The method according to claim 19, wherein the first key response message further comprises a second identity of the subscriber corresponding to the user equipment, and the method further comprises:
acquiring the second identity of the subscriber according to the first key response message received.

**21.** The method according to claim 20, wherein the second identity of the subscriber comprises a subscription permanent identifier SUPI corresponding to the user equipment.

**22.** The method according to claim 17, wherein sending the second authority request parameter to the third entity comprises:
sending the second authority request parameter to the third entity via a second key request message; wherein the second key request message is configured to indicate that the first proxy entity requests to acquire the first pending key information;
wherein acquiring the first pending key information sent by the third entity comprises:
receiving a second key response message sent by the third entity; and
acquiring the first pending key information comprised in the second key response message.

**23.** The method according to claim 17, wherein determining whether the user equipment has the first communication authority with the target entity according to the first pending key information comprises:
determining that the user equipment has the first communication authority with the target entity in a case that the first pending key information comprises entity key information corresponding to the target entity.

**24.** The method according to claim 17, wherein in a case that the UE authentication is successful, the method further comprises:
notifying the target entity of a first authentication result of the authentication.

**25.** The method according to claim 24, wherein notifying the target entity of the first authentication result comprises:
acquiring a proxy domain name of the first proxy entity and a first domain name of the target entity; and
notifying the target entity of the first authentication result in a case that the proxy domain name is different from the first domain name.

**25.** The method according to claim 24, wherein in a case that the target entity is a trusted entity providing an application function inside the 3GPP operator domain, notifying the target entity of the first authentication result comprises:
sending a first notification message to the target entity, wherein the first notification message comprises the first authentication result.

**26.** The method according to claim 25, wherein in a case that the first proxy entity acquires a second identity of the subscriber of the user equipment, the first notification message further comprises the second identity of the subscriber.

**27.** The method according to claim 24, wherein in a case that the target entity is an untrusted entity providing an application function outside the 3GPP operator domain, notifying the target entity of the first authentication result comprises:
sending a second notification message to a second entity according to the first authentication result to instruct the second entity to send the first authentication result to the target entity.

**28.** The method according to claim 27, wherein in a case that the first proxy entity acquires a second identity of the subscriber of the user equipment, the second notification message further comprises the second identity of the subscriber.

**29.** The method according to claim 14, wherein after the UE authentication is successful, the method further comprises:
establishing a secure session with the user equipment;
receiving, through the secure session, a target entity service request message sent by the user equipment; wherein the target entity service request message comprises a second target entity identifier, the second target entity identifier is a protected entity identifier acquired by the user equipment according to a first target entity identifier of the target entity, and the target entity service request message is a message sent by the user equipment in a case that it is determined that a proxy domain name of the first proxy entity is the same as a first domain name of the target entity;
determining whether the user equipment has a second communication authority with the target entity according to the second target entity identifier; and
sending a target entity service response message to the user equipment; wherein the target entity service response message is configured to indicate whether the user equipment has the second communication authority with the target entity.

**30.** The method according to claim 29, wherein the second communication authority comprises one or more of:
the user equipment having an access authority to the target entity;
the first proxy entity having a proxy authority to the target entity; or
the target entity having an acquisition authority to an identity of the subscriber of the user equipment.

**31.** The method according to claim 29, wherein determining whether the user equipment has the second communication authority with the target entity according to the second target entity identifier comprises:
determining that the user equipment has the second communication authority with the target entity in a case that the second target entity identifier is the same as the first target entity identifier.

**32.** The method according to claim 29, wherein determining whether the user equipment has the second communication authority with the target entity according to the second target entity identifier comprises:
determining a third authority request parameter according to the second target entity identifier in a case that the second target entity identifier is different from the first target entity identifier;
sending the third authority request parameter to a third entity; wherein the third authority request parameter is configured to instruct the third entity to determine whether the user equipment has the second communication authority with the target entity;
acquiring an authorization result parameter sent by the third entity; wherein the authorization result parameter is configured to indicate whether the user equipment has the second communication authority with the target entity; and
determining whether the user equipment has the second communication authority with the target entity according to the authorization result parameter.

**33.** The method according to claim 32, wherein determining the third authority request parameter according to the second target entity identifier comprises:
taking the second target entity identifier, a key identifier A-KID corresponding to the user equipment, and a proxy entity identifier corresponding to the first proxy entity as the third authority request parameter.

**34.** The method according to claim 32, wherein sending the third authority request parameter to the third entity comprises:
sending the third authority request parameter to the third entity via a third key request message; wherein the third key request message is configured to instruct the third entity to acquire the authorization result parameter and an identity of the subscriber of the user equipment;
wherein acquiring the authorization result parameter sent by the third entity comprises:
receiving a third key response message sent by the third entity; and
acquiring the authorization result parameter comprised in the third key response message.

**35.** The method according to claim 34, wherein the third key response message further comprises a second identity of the subscriber corresponding to the user equipment, and the method further comprises:
acquiring the second identity of the subscriber according to the third key response message received.

**36.** The method according to claim 34, wherein the third key request message further comprises an authorization indication parameter, and the authorization indication parameter is configured to instruct the third entity to determine whether the user equipment has the second communication authority with the target entity according to the third key request message.

**37.** The method according to claim 33, wherein sending the third authority request parameter to the third entity comprises:
sending the third authority request parameter to the third entity via a fourth key request message; wherein the fourth key request message is configured to indicate that the first proxy entity requests to acquire the authorization result parameter;
wherein acquiring the authorization result parameter sent by the third entity comprises:
receiving a fourth key response message sent by the third entity; and
acquiring the authorization result parameter comprised in the fourth key response message.

**38.** The method according to claim 37, wherein the fourth key request message further comprises an authorization indication parameter, the authorization indication parameter is configured to instruct the third entity to determine whether the user equipment has the second communication authority with the target entity according to the fourth key request message.

**39.** The method according to claim 31, wherein in a case that it is determined according to an authorization result parameter that the user equipment has the second communication authority with the target entity, the method further comprises:
notifying the target entity of a second authentication result; wherein the second authentication result is configured to indicate that the target entity has a communication authority with the target entity.

**40.** The method according to claim 39, wherein in a case that the target entity is a trusted entity providing an application function inside the 3GPP operator domain, notifying the target entity of the second authentication result comprises:
sending a third notification message to the target entity, wherein the third notification message comprises the second authentication result.

**41.** The method according to claim 40, wherein in a case that the first proxy entity acquires a second identity of the subscriber of the user equipment, the third notification message further comprises the second identity of the subscriber.

**42.** The method according to claim 39, wherein in a case that the target entity is an untrusted entity providing an application function outside the 3GPP operator domain, notifying the target entity of the second authentication result comprises:
sending a fourth notification message to a second entity according to a first authentication result to instruct the second entity to send the first authentication result to the target entity.

**43.** The method according to claim 43, wherein in a case that the first proxy entity acquires a second identity of the subscriber of the user equipment, the fourth notification message further comprises the second identity of the subscriber.

**44.** The method according to claim 17, wherein the first pending key information comprises an application key K_{AF} and a key expiration time.

**45.** The method according to claim 17, wherein a second entity comprises a network exposure function NEF entity or a service capability exposure function SCEF entity.

**46.** The method according to any one of claims 14 to 45, wherein the first proxy entity comprises a trusted authentication proxy AP entity inside the 3GPP operator domain.

**47.** The method according to any one of claims 14 to 45, wherein the first entity comprises: a trusted application function AF entity inside the 3GPP operator domain, a trusted service capability server SCS/application server AS entity inside the 3GPP operator domain, an untrusted application function AF entity outside the 3GPP operator domain, or an untrusted service capability server SCS/application server AS entity outside the 3GPP operator domain.

**48.** An authentication method, applied to a third entity, comprising:
receiving a second authority request parameter sent by a first proxy entity; wherein the second authority request parameter is configured to instruct the third entity to determine whether a user equipment has a first communication authority with a target entity, the target entity is an entity which is determined by the user equipment from one or more first entities and with which communication is requested, the first entity comprises an entity providing an application function, the first proxy entity comprises a trusted entity providing an authentication function inside a 3GPP operator domain, the first proxy entity provides an authentication proxy function for the first entity, and the third entity comprises an entity that provides AKMA authorization and application key derivation functions;
determining whether the user equipment has the first communication authority with the target entity according to the second authority request parameter;
acquiring first pending key information in a case that the user equipment has the first communication authority with the target entity; and
sending the first pending key information to the first proxy entity.

**49.** The method according to claim 48, wherein the second authority request parameter comprises a key identifier A-KID corresponding to the user equipment, a first target entity identifier of the target entity and a proxy entity identifier corresponding to the first proxy entity; wherein determining whether the user equipment has the first communication authority with the target entity according to the second authority request parameter comprises one or more of:
determining whether the user equipment has an access authority to the target entity according to the key identifier A-KID and the first target entity identifier;
determining whether the user equipment has an access authority to the first proxy entity according to the key identifier A-KID and the proxy entity identifier;
determining whether the first proxy entity has a proxy authority to the target entity according to the proxy entity identity and the first target entity identity; or
determining whether the target entity has an acquisition authority to an identity of the subscriber of the user equipment according to the key identifier A-KID and the first target entity identifier.

**50.** The method according to claim 48, wherein acquiring the first pending key information comprises:
acquiring the first pending key information according to entity key information corresponding to the target entity.

**51.** The method according to claim 48, wherein receiving the second authority request parameter sent by the first proxy entity comprises:
receiving the second authority request parameter sent by the first proxy entity via a first key request message; wherein the first key request message is configured to instruct the third entity to acquire the first pending key information and an identity of the subscriber of the user equipment; and
wherein sending the first pending key information to the first proxy entity comprises:
sending the first pending key information to the first proxy entity via a first key response message.

**52.** The method according to claim 51, wherein sending the first pending key information to the first proxy entity via the first key response message comprises:
sending the first pending key information and a second identity of the subscriber corresponding to the user equipment to the first proxy entity via the first key response message in a case that it is determined that the target entity has an acquisition authority to the identity of the subscriber.

**53.** The method according to claim 52, wherein the second identity of the subscriber is a subscription permanent identifier SUPI corresponding to the user equipment.

**54.** The method according to claim 48, wherein receiving the second authority request parameter sent by the first proxy entity comprises:
receiving the second authority request parameter sent by the first proxy entity via a second key request message; wherein the second key request message is configured to instruct the third entity to acquire the first pending key information; and
wherein sending the first pending key information to the first proxy entity comprises:
sending the first pending key information to the first proxy entity via a second key response message.

**55.** The method according to claim 48, wherein after sending the first pending key information to the first proxy entity, the method further comprises:
receiving a third authority request parameter sent by the first proxy entity;
determining whether the user equipment has a second communication authority with the target entity according to the third authority request parameter; and
sending an authorization result parameter to the first proxy entity; wherein the authorization result parameter is configured to notify the first proxy entity whether the user equipment has the second communication authority with the target entity.

**56.** The method according to claim 55, wherein the third authority request parameter comprises a key identifier A-KID, a second target entity identifier, and a proxy entity identifier corresponding to the first proxy entity, wherein the second target entity identifier is a protected entity identifier acquired by the user equipment according to a first target entity identifier of the target entity, and
wherein determining whether the user equipment has the second communication authority with the target entity according to the third authority request parameter comprises one or more of:
determining whether the user equipment has an access authority to the target entity according to the key identifier A-KID and the second target entity identifier;
determining whether the first proxy entity has a proxy authority to the target entity according to the proxy entity identifier and the second target entity identifier; or
determining whether the target entity has an acquisition authority to an identity of the subscriber of the user equipment according to the key identifier A-KID and the second target entity identifier.

**57.** The method according to claim 53, wherein receiving the third authority request parameter sent by the first proxy entity comprises:
receiving the third authority request parameter sent by the first proxy entity via a third key request message; wherein the third key request message is configured to instruct the third entity to acquire an authorization result parameter and an identity of the subscriber of the user equipment;
wherein sending the authorization result parameter to the first proxy entity comprises:
sending the authorization result parameter to the first proxy entity via a third key response message.

**58.** The method according to claim 57, wherein the third key request message further comprises an authorization indication parameter, and the authorization indication parameter is configured to instruct the third entity to determine whether the user equipment has the second communication authority with the target entity according to the third key request message.

**59.** The method according to claim 57, wherein sending the authorization result parameter to the first proxy entity via the third key response message comprises:
sending the authorization result parameter and a second identity of the subscriber corresponding to the user equipment to the first proxy entity via the third key response message in a case that it is determined that the target entity has an acquisition authority to the identity of the subscriber.

**60.** The method according to claim 59, wherein the second identity of the subscriber is a subscription permanent identifier SUPI corresponding to the user equipment.

**61.** The method according to claim 53, wherein receiving the third authority request parameter sent by the first proxy entity comprises:
receiving the third authority request parameter sent by the first proxy entity via a fourth key request message; wherein the fourth key request message is configured to instruct the third entity to acquire the authorization result parameter;
wherein sending the authorization result parameter to the first proxy entity comprises:
sending the authorization result parameter to the first proxy entity via a fourth key response message.

**62.** The method according to claim 55, wherein before determining whether the user equipment has the second communication authority with the target entity according to the third authority request parameter, the method further comprises:
determining whether the third entity has an authority to serve the first proxy entity according to a first preset policy; and
wherein determining whether the user equipment has the second communication authority with the target entity according to the third authority request parameter comprises:
determining whether the user equipment has the second communication authority with the target entity according to the third authority request parameter in a case that the third entity has the authority to serve the first proxy entity.

**63.** The method according to claim 48, wherein before determining whether the user equipment has the first communication authority with the target entity according to the second authority request parameter, the method further comprises:
determining whether the third entity has an authority to serve the first proxy entity according to a first preset policy; and
wherein determining whether the user equipment has the first communication authority with the target entity according to the second authority request parameter comprises:
determining whether the user equipment has the first communication authority with the target entity according to the second authority request parameter in a case that the third entity has the authority to serve the first proxy entity.

**64.** The method according to any one of claims 48 to 63, wherein the first proxy entity comprises a trusted authentication proxy AP entity inside the 3GPP operator domain; and the third entity comprises: an AKMA anchor function AAnF entity.

**65.** The method according to any one of claims 48 to 63, wherein the first entity comprises: a trusted application function AF entity inside the 3GPP operator domain, a trusted service capability server SCS/application server AS entity inside the 3GPP operator domain, an untrusted application function AF entity outside the 3GPP operator domain, or an untrusted service capability server SCS/application server AS entity outside the 3GPP operator domain.

**66.** An authentication method, applied to a target entity in one or more first entities, comprising:
acquiring an authentication result of a first proxy entity to a user equipment, wherein the authentication result comprises a first authentication result or a second authentication result, the first authentication result is configured to indicate that the user equipment has a first communication authority with the target entity; the second authentication result is configured to indicate that the user equipment has a second communication authority with the target entity; the first entity comprises an entity providing an application function, the target entity is an entity which is determined by the user equipment from one or more first entities and with which communication is requested, the first proxy entity comprises a trusted entity providing an authentication function inside a 3GPP operator domain, and the first proxy entity provides an authentication proxy function for the first entity; and
communicating with the user equipment according to the authentication result.

**67.** The method according to claim 66, wherein in a case that the target entity is a trusted entity providing the application function inside the 3GPP operator domain, acquiring the authentication result of the first proxy entity to the user equipment comprises:
receiving a first notification message sent by the first proxy entity, wherein the first notification message comprises the first authentication result; or
receiving a third notification message sent by the first proxy entity, wherein the third notification message comprises the second authentication result.

**68.** The method according to claim 67, wherein the first notification message or the third notification message further comprises a second identity of the subscriber corresponding to the user equipment.

**69.** The method according to claim 68, wherein the second identity of the subscriber comprises a subscription permanent identifier SUPI corresponding to the user equipment.

**70.** The method according to claim 66, wherein in a case that the target entity is an untrusted entity providing the application function outside the 3GPP operator domain, acquiring the authentication result of the first proxy entity to the user equipment comprises:
receiving a fifth notification message sent by a second entity; wherein the fifth notification message comprises the first authentication result, and the fifth notification message is a message sent by the second entity in response to receiving a second notification message; or
receiving a sixth notification message sent by the second entity; wherein the sixth notification message comprises the second authentication result, and the fifth notification message is a message sent by the second entity in response to receiving a fourth notification message.

**71.** The method according to claim 70, wherein the fifth notification message or the sixth notification message further comprises a first identity of the subscriber of the user equipment.

**72.** The method according to claim 71, wherein the first identity of the subscriber is a generic public subscription identifier GPSI corresponding to the user equipment.

**73.** The method according to any one of claims 66 to 72, wherein the first proxy entity comprises a trusted authentication proxy AP entity inside the 3GPP operator domain.

**74.** The method according to any one of claims 66 to 72, wherein the first entity comprises: a trusted application function AF entity inside the 3GPP operator domain, a trusted service capability server SCS/application server AS entity inside the 3GPP operator domain, an untrusted application function AF entity outside the 3GPP operator domain, or an untrusted service capability server SCS/application server AS entity outside the 3GPP operator domain.

**75.** An authentication method, applied to a second entity, comprising:
acquiring an authentication result of a first proxy entity to a user equipment; wherein the authentication result comprises a first authentication result or a second authentication result, the first authentication result is configured to indicate that the user equipment has a first communication authority with a target entity; the second authentication result is configured to indicate that the user equipment has a second communication authority with the target entity; the target entity is an entity which is determined by the user equipment from one or more first entities and with which communication is requested, the first entity comprises an untrusted entity providing an application function outside a 3GPP operator domain, the first proxy entity comprises a trusted entity providing an authentication function inside the 3GPP operator domain, and the first proxy entity provides an authentication proxy function for the first entity; and
sending the authentication result to the target entity to make the target entity communicate with the user equipment according to the authentication result.

**76.** The method according to claim 75, wherein acquiring the authentication result of the first proxy entity to the user equipment comprises:
receiving a second notification message sent by the first proxy entity; wherein the second notification message is a message sent by the first proxy entity to the second entity according to the first authentication result in a case that the target entity is an untrusted entity providing an application function outside the 3GPP operator domain; and
acquiring the first authentication result according to the second notification message;
wherein sending the authentication result to the target entity comprises:
sending a fifth notification message to the target entity according to the first authentication result.

**77.** The method according to claim 76, wherein in a case that the second notification message comprises a second identity of the subscriber corresponding to the user equipment, sending the fifth notification message to the target entity according to the first authentication result comprises:
acquiring a first identity of the subscriber corresponding to the user equipment according to the second identity of the subscriber; and
sending the fifth notification message to the target entity according to the first authentication result and the first identity of the subscriber.

**78.** The method according to claim 77, wherein the first identity of the subscriber is a generic public subscription identifier GPSI corresponding to the user equipment; and the second identity of the subscriber comprises a subscription permanent identifier SUPI corresponding to the user equipment.

**79.** The method according to claim 75, wherein acquiring the authentication result of the first proxy entity to the user equipment comprises:
receiving a fourth notification message sent by the first proxy entity; wherein the fourth notification message is a message sent by the first proxy entity to the second entity according to the second authentication result in a case that the target entity is an untrusted entity providing an application function outside the 3GPP operator domain; and
acquiring the second authentication result according to the second notification message;
wherein sending the authentication result to the target entity comprises:
sending a sixth notification message to the target entity according to the second authentication result.

**80.** The method according to claim 79, wherein in a case that the fourth notification message comprises a second identity of the subscriber corresponding to the user equipment, sending the sixth notification message to the target entity according to the second authentication result comprises:
acquiring a first identity of the subscriber corresponding to the user equipment according to the second identity of the subscriber; and
sending the sixth notification message to the target entity according to the second authentication result and the first identity of the subscriber.

**81.** The method according to any one of claims 66 to 80, wherein the second entity comprises: a network exposure function NEF entity or a service capability exposure function SCEF entity.

**82.** An authentication apparatus, applied to a user equipment, comprising:
a target entity determining module configured to determine, from one or more first entities, a target entity with which communication is requested;
a parameter determining module configured to determine a first authority request parameter according to the target entity;
a first message sending module configured to send an application session establishment request message to a first proxy entity according to the first authority request parameter; wherein the application session establishment request message is configured to instruct the first proxy entity to determine whether the user equipment has a first communication authority with the target entity according to the first authority request parameter; the first entity comprises an entity providing an application function, the first proxy entity comprises a trusted entity providing an authentication function inside a 3GPP operator domain, and the first proxy entity provides an authentication proxy function for the first entity;
a first message receiving module configured to determine whether the user equipment has the first communication authority with the target entity in response to receiving an application session establishment response message sent by the first proxy entity; and
an authentication module configured to perform authentication through the first proxy entity in a case that the user equipment has the first communication authority with the target entity.

**83.** An authentication apparatus, applied to a first proxy entity, comprising:
a first proxy receiving module configured to receive an application session establishment request message sent by a user equipment; wherein the application session establishment request message comprises a first authority request parameter, the application session establishment request message is configured to instruct the first proxy entity to determine whether the user equipment has a first communication authority with a target entity according to the first authority request parameter, the target entity is an entity which is determined by the user equipment from one or more first entities and with which communication is requested, the first entity comprises an entity providing an application function, the first proxy entity comprises a trusted entity providing an authentication function inside a 3GPP operator domain, and the first proxy entity provides an authentication proxy function for the first entity;
a first proxy determining module configured to determine whether the user equipment has the first communication authority with the target entity according to the first authority request parameter; and
a first proxy sending module configured to send an application session establishment response message to the user equipment, and perform UE authentication in a case that the user equipment has the first communication authority with the target entity.

**84.** An authentication apparatus, applied to a third entity, comprising:
a third receiving module configured to receive a second authority request parameter sent by a first proxy entity; wherein the second authority request parameter is configured to instruct the third entity to determine whether a user equipment has a first communication authority with a target entity, the target entity is an entity which is determined by the user equipment from one or more first entities and with which communication is requested, the first entity comprises an entity providing an application function, the first proxy entity comprises a trusted entity providing an authentication function inside a 3GPP operator domain, the first proxy entity provides an authentication proxy function for the first entity, and the third entity comprises an entity that provides AKMA authorization and application key derivation functions;
a third determining module configured to determine whether the user equipment has the first communication authority with the target entity according to the second authority request parameter;
a third key module configured to acquire first pending key information in a case that the user equipment has the first communication authority with the target entity; and
a third sending module configured to send the first pending key information to the first proxy entity.

**85.** An authentication apparatus, applied to a target entity in one or more first entities, comprising: a first communication module configured to:
acquire an authentication result of a first proxy entity to a user equipment, wherein the authentication result comprises a first authentication result or a second authentication result, the first authentication result is configured to indicate that the user equipment has a first communication authority with the target entity; the second authentication result is configured to indicate that the user equipment has a second communication authority with the target entity; the first entity comprises an entity providing an application function, the target entity is an entity which is determined by the user equipment from one or more first entities and with which communication is requested, the first proxy entity comprises a trusted entity providing an authentication function inside a 3GPP operator domain, and the first proxy entity provides an authentication proxy function for the first entity; and
communicate with the user equipment according to the authentication result.

**86.** An authentication apparatus, applied to a second entity, comprising:
a second receiving module configured to acquire an authentication result of a first proxy entity to a user equipment; wherein the authentication result comprises a first authentication result or a second authentication result, the first authentication result is configured to indicate that the user equipment has a first communication authority with a target entity; the second authentication result is configured to indicate that the user equipment has a second communication authority with the target entity; the target entity is an entity which is determined by the user equipment from one or more first entities and with which communication is requested, the first entity comprises an untrusted entity providing an application function outside a 3GPP operator domain, the first proxy entity comprises a trusted entity providing an authentication function inside the 3GPP operator domain, and the first proxy entity provides an authentication proxy function for the first entity; and
a second sending module configured to send the authentication result to the target entity to make the target entity communicate with the user equipment according to the authentication result.

**87.** An authentication apparatus, comprising:
a processor; and
a memory for storing instructions executable by the processor;
wherein the processor is configured to perform the steps of the method according to any one of claims 1 to 13, or the processor is configured to perform the steps of the method according to any one of claims 14 to 47, or the processor is configured to perform the steps of the method according to any one of claims 48 to 65, or the processor is configured to perform the steps of the method according to any one of claims 66 to 74, or the processor is configured to perform the steps of the method according to any one of claims 75 to 81.

**88.** A computer-readable storage medium, having stored therein computer program instructions that, when executed by a processor, cause the steps of the method according to any one of claims 1 to 13, or the steps of the method according to any one of claims 14 to 47, or the steps of the method according to any one of claims 48 to 65, or the steps of the method according to any one of claims 66 to 74, or the steps of the method according to any one of claims 75 to 81 to be implemented.

**89.** A chip, comprising a processor and an interface, wherein the processor is configured to read instructions to perform the steps of the method according to any one of claims 1 to 13, or the processor is configured to read instructions to perform the steps of the method according to any one of claims 14 to 47, or the processor is configured to read instructions to perform the steps of the method according to any one of claims 48 to 65, or the processor is configured to read instructions to perform the steps of the method according to any one of claims 66 to 74, or the processor is configured to read instructions to perform the steps of the method according to any one of claims 75 to 81.
